(19) Europäisches Patentamt / European Patent Office / Office européen des brevets

(11) **EP 3 700 805 B1**

(12) **EUROPÄISCHE PATENTSCHRIFT**

(45) Veröffentlichungstag und Bekanntmachung des Hinweises auf die Patenterteilung:
**04.09.2024   Patentblatt 2024/36**

(21) Anmeldenummer: **18807554.3**

(22) Anmeldetag: **24.10.2018**

(51) Internationale Patentklassifikation (IPC):
**B62D 15/02** (2006.01)      **B60W 30/06** (2006.01)

(52) Gemeinsame Patentklassifikation (CPC):
**B62D 15/0285; B60W 30/06; G01C 21/3685;**
B60W 2540/043

(86) Internationale Anmeldenummer:
**PCT/DE2018/200096**

(87) Internationale Veröffentlichungsnummer:
**WO 2019/080975 (02.05.2019 Gazette 2019/18)**

(54) **VERFAHREN ZUM STEUERN EINES PARKVORGANGS**

METHOD FOR CONTROLLING A PARKING PROCESS

PROCÉDÉ POUR LA COMMANDE D'UNE MAN UVRE DE STATIONNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.10.2017   DE 102017219351**

(43) Veröffentlichungstag der Anmeldung:
**02.09.2020   Patentblatt 2020/36**

(73) Patentinhaber: **Continental Autonomous Mobility Germany GmbH**
**85057 Ingolstadt (DE)**

(72) Erfinder:
• **EDLING, Frank**
**65824 Schwalbach (DE)**
• **DEUSCH, Hendrik**
**65195 Wiesbaden (DE)**
• **GHOSH, Sharmila**
**55128 Mainz (DE)**

(74) Vertreter: **Continental Corporation**
**c/o Continental Automotive GmbH**
**Intellectual Property**
**Nordostpark 30**
**90411 Nürnberg (DE)**

(56) Entgegenhaltungen:
DE-A1- 102006 039 583   DE-A1- 102011 100 277
DE-A1- 102013 015 349   DE-A1- 102015 210 428
DE-A1- 102016 211 180   US-A1- 2013 035 821
US-A1- 2017 096 168

**Beschreibung**

Die Erfindung betrifft ein Verfahren zum Steuern eines Parkvorgangs eines Fahrzeugs sowie ein Fahrzeug mit einem Parkassistenzsystem.

Aus dem Stand der Technik sind Parkassistenzsysteme bereits bekannt, mittels denen ein Parkvorgang teilautomatisiert bzw. vollautomatisiert durchgeführt werden kann. Dabei kann das Parkassistenzsystem den Parkvorgang durchführen, wenn der Fahrer sich im Fahrzeug befindet oder das Parkassistenzsystem bietet die Möglichkeit, dass sich der Fahrer während des Parkvorgangs nicht im Fahrzeug befindet, d.h. den Parkvorgang remote startet, beispielsweise mittels eines Fahrzeugschlüssels, einer Applikation auf einem Smartphone etc.

DE 102015210428 A1 offenbart ein Verfahren zum Steuern eines Kraftfahrzeugs umfassend die Schritte des Steuerns eines hochgradig automatisierten Fahrmanövers des Kraftfahrzeugs auf der Basis eines vorbestimmten Parameters, des Bestimmens einer Bewertung des Fahrmanövers durch einen Fahrer des Kraftfahrzeugs und des Anpassens, auf der Basis der Bewertung, des Parameters.

DE102006039583A1 offenbart ein Fahrerassistenzsystem, welches eine Einlernzeit für den Fahrer berücksichtigt, sodass sich dieser mit der Funktionsweise vertraut machen kann.

DE102011100277A1 offenbart ein Verfahren zur Parametrierung eines Fahrerassistenzsystems, insbesondere eines Abstandsregeltempomaten, Fernlichtassistenten und/oder Fahrspurassistenten. Es wird ein Parameter zur Steuerung wenigstens einer Assistenzfunktion des Assistenzsystems angepasst.

US 2017096168 A1 offenbart ein Parkassistenzsystem mit einem Parkplatzsensor zum Suchen eines Parkplatzes um ein Fahrzeug herum und zum Erhalten von Informationen über die Parkumgebung, mit einem Fahrersensor zum Erfassen eines Fahrers im Fahrzeug und zum Gewinnen von Fahrerinformationen, einen Mitfahrersensor zum Erfassen eines Mitfahrers im Fahrzeug und zum Erhalt von Mitfahrerinformationen. Weiterhin umfasst das Parkassistenzsystem eine Steuereinrichtung zum Erzeugen einer Parkreferenzlinie für den Parkplatz basierend auf einem Standardkriterium für das vollständige Einparken und zum Reflektieren eines Versatzes auf der Grundlage auf einem oder mehrerer Parkumgebungsinformationen, der Fahrerinformation und der Mitfahrerinformation zu dem Standardkriterium für das vollständige Einparken, um die Position der Parkbezugslinie zu ändern.

US 2017/096168 A1 beschreibt insbesondere ein Fahrzeug, das Identifikationsmittel und Sensormittel nach Anspruch 19 umfasst.

Nachteilig an den bekannten Parkassistenzsystemen ist jedoch, dass unterschiedliche Fahrer unterschiedliche Erwartungen an das Fahrassistenzsystem haben. So wünscht beispielsweise ein erster Fahrer einen möglichst schnell durchgeführten Parkvorgang mit einer geringeren Genauigkeit, wohingegen ein zweiter Fahrer eine langsamere Durchführung bei einer höheren Genauigkeit erwartet.

Ausgehend hiervon ist es Aufgabe der Erfindung, ein Verfahren zum Steuern eines Parkvorgangs anzugeben, das ein nutzerspezifisches Parkverhalten ermöglicht.

Die Aufgabe wird durch ein Verfahren mit den Merkmalen des unabhängigen Patentanspruchs 1 gelöst. Bevorzugte Ausführungsformen sind Gegenstand der Unteransprüche. Ein Fahrzeug mit einem Parkassistenzsystem ist Gegenstand des nebengeordneten Patentanspruchs 19.

Gemäß einem ersten Aspekt bezieht sich die Erfindung auf ein Verfahren zum Steuern eines Parkvorgangs eines Fahrzeugs mittels eines Parkassistenzsystems. Das Verfahren umfasst dabei die folgenden Schritte: Zunächst wird ein Fahrer identifiziert. Dies kann beispielsweise durch eine Fahrzeugschlüsselerkennung erfolgen, wobei der Fahrzeugschlüssel einem bestimmten Fahrer zugeordnet wurde. Alternativ kann dies über eine Vielzahl von anderen Verfahren und Erkennungsmittel zur Fahrererkennung erfolgen, beispielsweise durch Erkennung eines einem Fahrer zugeordneten mobilen Endgeräts (beispielsweise eines Handys oder eines Smartphones), einer Chipkarte, eines RFIDs, durch Fingerabdruckerkennung, durch Scannen von fahrerspezifischen Gesichts- bzw. Augencharakteristika etc.

Anschließend werden während eines vom Fahrer durchgeführten Parkvorgangs Fahrerparameter erlernt und dem identifizierten Fahrer zugeordnet. Insbesondere werden Informationen erfasst, wie schnell ein bestimmter Fahrer einen Parkvorgang durchführt, wie schnell dieser an in der Umgebung befindliche Objekte heranfährt, wie nahe dieser an in der Umgebung befindliche Objekte heranfährt und wie exakt ein Fahrer in eine Parklücke einparkt. Hierbei bedeutet "exakt" insbesondere eine Positionsgenauigkeit des Fahrzeugs in Längs- und Querrichtung und/oder die winkelgenaue Ausrichtung der Längsachse des Fahrzeugs relativ zur Längsachse der Parklücke (nachfolgend als Ausrichtungswinkel bezeichnet).

Nach dem Lernvorgang werden basierend auf den erlernten Fahrerparametern Parkparameter bestimmt. Dies erfolgt dadurch, dass aus den Fahrerparametern Informationen extrahiert werden, die angeben, wie ein bestimmter Fahrer gewöhnlich einen Parkvorgang durchführt. Diese extrahierten Informationen werden in Form von Parkparametern in dem Parkassistenzsystem appliziert oder aus den extrahierten Informationen werden Parkparameter abgeleitet, die dann appliziert werden. D.h. das Parkassistenzsystem wird basierend auf den extrahierten Informationen derart modifiziert, dass sich ein fahrerspezifisches Parkverhalten des Parkassistenzsystems einstellt.

Daraufhin kann der durch ein Parkassistenzsystem durchgeführte Parkvorgang des Fahrzeugs basierend auf den Parkparametern gesteuert werden.

Der wesentliche Vorteil des erfindungsgemäßen Verfahrens besteht darin, dass das Parkassistenzsystem nutzerabhängig adaptierbar ist, so dass sich für den jeweiligen Fahrer ein natürliches Parkverhalten des Parkassistenzsystems einstellt.

Das Erlernen von Fahrerparametern aus vom Fahrer durchgeführten Parkvorgängen kann durch ein maschinelles Lernverfahren, beispielsweise unter Nutzung von neuronalen Netzen, erfolgen.

Erfindungsgemäß umfasst der Schritt des Erlernens von Fahrerparametern das Erfassen der Fahrzeuggeschwindigkeit, des Lenkwinkels, einer Lenkwinkelgeschwindigkeit, zumindest eines Abstandswerts eines Objekts relativ zum Fahrzeug im Umgebungsbereich des Fahrzeugs und Beschleunigungs- bzw. Verzögerungsparameter des Fahrzeugs. Insbesondere werden die Fahrerparameter durch Abtastung mit einer Abtastrate kleiner als 1 sec., insbesondere 1 00ms erfasst und in einem Messwertearray abgespeichert. Dadurch kann ein fahrerspezifisches Parkverhalten aus den erfassten Fahrerparametern abgeleitet werden.

Gemäß einem Ausführungsbeispiel umfasst der Schritt des Erlernens von Fahrerparametern das Erfassen der Fahrzeuggeschwindigkeit in Abhängigkeit des Lenkwinkels, das Erfassen der Fahrzeuggeschwindigkeit in Abhängigkeit der Lenkwinkelgeschwindigkeit, das Erfassen der Fahrzeuggeschwindigkeit in Abhängigkeit des Lenkwinkels und eines Abstandswerts eines Objekts relativ zum Fahrzeug im Umgebungsbereich des Fahrzeugs und/oder Beschleunigungs- bzw. Verzögerungsparameter des Fahrzeugs in Abhängigkeit eines Abstandswerts eines Objekts relativ zum Fahrzeug im Umgebungsbereich des Fahrzeugs. Insbesondere werden die Fahrerparameter durch Abtastung mit einer Abtastrate kleiner als 1 sec., insbesondere 100ms erfasst und in einem Messwertearray abgespeichert. Dadurch können nutzerspezifische Parkcharakteristika (z.B. wie schnell wird beim Parken auf ein Objekt zugefahren, wie abrupt wird abgebremst etc.) erfasst und zur Adaption des Parkassistenzsystems verwendet werden.

Gemäß einem Ausführungsbeispiel umfasst der Schritt des Erlernens von Fahrerparametern das Sammeln einer Vielzahl von Messwerten an zeitlich aufeinanderfolgenden Messzeitpunkten und das Bilden eines Durchschnittswerts dieser Messwerte. Beispielsweise kann nach Erreichen einer vorgegebenen Anzahl von automatisiert durchgeführten Parkvorgängen (insbesondere getrennt für die jeweilige Art von Parkmanöver (vorwärts, rückwärts, seitlich etc.)) ein Durchschnittswert von Messwerten ermittelt werden, so dass beispielsweise ein ungewöhnlich schnell durchgeführter Parkvorgang keine erheblichen Auswirkungen auf die vom Parkassistenzsystem durchgeführten Parkvorgänge hat. Ebenso kann die statistische Signifikanz eines bestimmten Fahrerparameters ermittelt werden, um zu entscheiden, ob der Fahrerparameter zur Adaption des Parkassistenzsystems verwendet werden kann oder nicht.

Gemäß einem Ausführungsbeispiel enthält der Schritt des Erlernens von Fahrerparametern zusätzlich das Erfassen und Abspeichern von Informationen hinsichtlich der Parkrichtung, Informationen zur Ausrichtung des geparkten Fahrzeugs relativ zur Parklücke nach dem Beenden des Parkvorgangs, Informationen hinsichtlich der benötigten Parkzüge und/oder des Parkvorgangtyps (senkrecht, schräg, parallel etc.). Dadurch kann das Parkassistenzsystem selektiv für unterschiedliche Parkszenarien an den jeweiligen Nutzer angepasst werden.

Gemäß einem Ausführungsbeispiel enthält der Schritt des Erlernens von Fahrerparametern einen Prüfschritt, ob während des vom Fahrer durchgeführten Parkvorgangs ermittelte Parkvorgangscharakteristika jeweils innerhalb eines definierten Bereichs liegen. So können beispielsweise als Parkvorgangscharakteristika ein oder mehrere Schwellwerte festgelegt werden, beispielsweise solche, die angeben, ob die Parkgenauigkeit des Fahrers zumindest eine Mindestgenauigkeit erreicht hat. Alternativ oder zusätzlich kann ermittelt werden, ob die Anzahl der Parkzüge, die der Fahrer zum Erreichen der Parkposition aufgewendet hat, eine Parkzugobergrenze nicht überschritten hat. Weiterhin alternativ oder zusätzlich kann ermittelt werden, ob die während des Parkvorgangs erreichten maximalen Beschleunigungswerte (positive Beschleunigung und/oder negative Beschleunigung beim Abbremsen) zumindest ein Beschleunigungswertmaximum nicht überschritten haben. Die erlernten Fahrerparameter werden lediglich dann zur Bestimmung von Parkparametern herangezogen, wenn sich die Parkvorgangscharakteristika jeweils innerhalb des definierten Bereichs befinden bzw. Grenzwerte nicht überschritten bzw. unterschritten haben. Dadurch kann erreicht werden, dass lediglich diejenigen vom Fahrer durchgeführten Parkmanöver zum Adaptieren des Parkassistenzsystems herangezogen werden, die gewisse Mindestanforderungen erfüllen.

Gemäß einem Ausführungsbeispiel enthält der Schritt des Bestimmens von Parkparametern einen Schritt zur Mittelung mehrerer Fahrerparameter, die durch eine Mindestanzahl von vom identifizierten Fahrer durchgeführten Parkvorgängen ermittelt wurden. Dadurch wird das Parkassistenzsystem nicht abrupt sondern stetig unter Berücksichtigung eines mittleren fahrerspezifischen Parkverhaltens an dessen Parkgewohnheiten angepasst.

Gemäß einem Ausführungsbeispiel umfasst der Schritt des Erlernens von Fahrerparametern die Bestimmung zumindest eines Toleranzparameters, der angibt, wie weit die Parkposition, an die das Fahrzeug mittels des vom Fahrer durchgeführten Parkvorgangs bewegt wurde, von einer vom Parkassistenzsystem bestimmten Soll-Parkposition abweicht. Basierend auf diesem Toleranzparameter kann ermittelt werden, ob ein bestimmter Fahrzeugnutzer eine sehr hohe Parkgenauigkeit (z.B. mittige Anordnung des Fahrzeugs in der Parklücke, Ausrichtung der Fahrzeuglängsachse relativ zur Parklücke etc.) bevorzugt oder Abweichungen von einer Soll-Parkposition toleriert. Basierend darauf kann das Parkassistenzsystem den Parkvorgang steuern, nämlich beispielsweise derart, dass der automatisierte Parkvorgang mit einer geringeren Anzahl von Parkzügen und einer höheren Abweichung von einer Soll-Parkposition durchgeführt wird oder der Fahrer eine höhere Anzahl von Parkzügen toleriert, um eine geringere Abweichung von einer Soll-Parkposition zu erhalten.

Gemäß einem Ausführungsbeispiel umfasst die Bestimmung zumindest eines Toleranzparameters eine Abweichung der Position des geparkten Fahrzeugs von der Sollposition in einer ersten und zweiten Raumrichtung (z.B. x- und y- Richtung) sowie eine Abweichung eines Ausrichtungswinkels des Fahrzeugs von einem Soll-Ausrichtungswinkel (insbesondere Ausrichtung der Fahrzeuglängsachse relativ zur Längsachse der Parklücke). Durch diese Parameter lässt sich die Parkgenauigkeit des jeweiligen Fahrers relativ zu einer Soll-Parkposition für die jeweilige Parkposition bestimmen.

Gemäß einem Ausführungsbeispiel umfasst die Bestimmung zumindest eines Toleranzparameters die Bestimmung der Anzahl der Parkzüge zum Erreichen der Parkposition. Damit kann festgestellt werden, wie viele Parkvorgänge ein bestimmter Fahrer bei einem automatisiert durchgeführten Parkvorgang akzeptiert.

Gemäß einem Ausführungsbeispiel werden zur Bestimmung zumindest eines Toleranzparameters zumindest eine erste und eine zweite Genauigkeitszone ermittelt. Ferner wird ermittelt, wie viele Parkzüge der Fahrer des Fahrzeugs benötigt hat, um in die erste Genauigkeitszone bzw. von der ersten Genauigkeitszone in die zweite, höhere Genauigkeitszone zu gelangen. Diese Anzahl an Parkzügen wird dann als fahrerspezifische Parkzuginformation abgespeichert. Dadurch kann ein Parkprozess in mehrere Genauigkeitsstufen unterteilt werden, wobei jeder Genauigkeitsstufe eine zweidimensionale Genauigkeitszone zugeordnet ist. Es versteht sich, dass auch mehr als zwei Genauigkeitszonen bestimmt bzw. verwendet werden können. Die Gesamtanzahl der Parkzüge wird dann in mehrere Teilanzahlen von Parkzügen unterteilt, wobei jede Teilanzahl angibt, wie viele Parkzüge verwendet wurden, um eine bestimmte Genauigkeitszone zu erreichen.

Gemäß einem Ausführungsbeispiel wird die Anzahl der nötigen Parkzüge, um in die erste Genauigkeitszone bzw. von der ersten Genauigkeitszone in eine zweite, höhere Genauigkeitszone zu gelangen, getrennt für Fahrzeugpositionswerte in zumindest zwei Raumrichtungen und den Ausrichtungswinkel des Fahrzeugs ermittelt. Dadurch kann beispielsweise ein Nachrangieren in der Parklücke, mittels dem der Ausrichtungswinkel des Fahrzeugs, nicht jedoch die Fahrzeugsposition (in x- und y-Richtung) verbessert wurde, erfasst und zur Adaption des Parkassistenzsystems herangezogen werden.

Gemäß einem Ausführungsbeispiel wird beim Schritt des Steuerns eines Parkvorgangs durch das Parkassistenzsystem nach dem Erreichen der ersten Genauigkeitszone ermittelt, wieviele Parkzüge durch das Parkassistenzsystem benötigt würden, um die zweite, höhere Genauigkeitszone zu erreichen und dass durch einen Vergleich mit der fahrerspezifischen Parkzuginformation entschieden wird, ob der durch das Parkassistenzsystem gesteuerte Parkprozess zum Erreichen einer höheren Parkgenauigkeit fortgesetzt wird. So kann beispielsweise ermittelt werden, dass das Parkassistenzsystem drei weitere Parkzüge benötigen würde, um von der ersten Genauigkeitszone in die zweite, nächsthöhere Genauigkeitszone zu gelangen. Für den Fall, dass die fahrerspezifischen Parkzuginformation jedoch angeben, dass der Fahrer in einem solchen Fall lediglich zwei weitere Parkzüge vollzieht, würde das Parkassistenzsystem den Parkprozess nicht weiter fortsetzen. Wenn jedoch aus den fahrerspezifischen Parkzuginformationen hervorgeht, dass der Fahrer für gewöhnlich drei oder mehr Parkzüge zum Erreichen der zweiten Genauigkeitszone akzeptiert, würde das Parkassistenzsystem den Parkprozess fortsetzen, um eine höhere Parkgenauigkeit zu erreichen.

Gemäß einem Ausführungsbeispiel wird basierend auf den ermittelten Fahrerparametern die Planung der Parktrajektorie und/oder der Bewegungsablauf des Fahrzeugs auf dieser Parktrajektorie beeinflusst. So kann beispielsweise bei der Trajektorienplanung die Fahrzeuggeschwindigkeit an jedem Punkt der Parktrajektorie an die Fahrzeuggeschwindigkeit angepasst werden, die der Fahrer typischerweise bei Einparkvorgängen verwendet. Insbesondere kann dies auch die Fahrzeuggeschwindigkeit in Abhängigkeit von einem Abstand zu einem Umgebungsobjekt einschließen. Ebenso können die Beschleunigung bzw. das Abbremsverhalten bzw. die Abstände zu Objekten in der Umgebung beim automatisierten Parkvorgang an die nutzerspezifischen Parkgewohnheiten angepasst werden.

Gemäß einem Ausführungsbeispiel werden während eines vom Parkassistenzsystem durchgeführten Parkvorgangs Interaktionen des Fahrers mit Fahrzeugsteuerungsmitteln und/oder Informationen über den Fahrer selbst erfasst und basierend darauf die Parkparameter angepasst. So können beispielsweise vom Fahrer durchgeführte Bremsvorgänge, Lenkeingriffe, Interaktionen mit einer Fahrzeugschnittstelle (beispielsweise Deaktivieren des Parkassistenzsystems), ein Türöffnen, Schaltvorgänge und/oder Kuppelvorgänge erfasst werden. Basierend auf diesen erfassten Informationen können die das Parkassistenzsystem beeinflussenden Parkparameter entsprechend angepasst werden (beispielsweise Erhöhen des Abstandes zu Umgebungsobjekten, Reduzieren der Geschwindigkeit etc.).

Erfindungsgemäß werden die Parkparameter abhängig von der Anzahl der vom Parkassistenzsystem durchgeführten und dem identifizierten Fahrer zugeordneten Parkvorgänge sukzessive angepasst. Insbesondere wird der Sicherheitsabstand zu einem Umgebungsobjekt sukzessive reduziert und/oder die Geschwindigkeit des Fahrzeugs beim Parkvorgang wird sukzessive erhöht. Dadurch kann erreicht werden, dass das Parkassistenzsystem zeitlich adaptiert wird, da davon auszugehen ist, dass ein Fahrer nach einer längeren Nutzungsdauer des Systems Vertrauen in das Parksystem hat.

Gemäß einem Ausführungsbeispiel werden bei dem Bestimmen von Parkparametern zusätzlich Fahrerpräferenzen berücksichtigt. Diese Fahrerpräferenzen können beispielsweise vom jeweiligen Fahrer vorgenommene und diesem zugeordnete Eingaben sein. Diese können in einem Initialisierungsprozess und/oder beim Eintreten einer Parksituation, die Informationen über eine Fahrerpräferenz erforderlich macht, abgefragt werden.

Die Fahrerpräferenzen können beispielsweise Informationen hinsichtlich der Erlaubnis zum Parken auf Parkflächen für Behinderte, hinsichtlich des Parkens auf Frauen- oder Mutter-Kind-Parkplätzen, hinsichtlich der Bereitschaft zu bezahltem Parken, der Erlaubnis zum Parken auf Parkflächen für Anwohner in einem bestimmten Bereich, hinsichtlich der Akzeptanz des Überfahrens von Bordsteinen, hinsichtlich der Bereitschaft zu direktem Vorwärtseinparken, hinsichtlich der Bereitschaft zur Reaktion auf Änderungen der Parksituation während des Parkvorgangs und/oder eine Vorwärts- bzw. Rückwärts-Einparkpräferenz enthalten.

Gemäß einem Ausführungsbeispiel werden während eines vom Parkassistenzsystem durchgeführten Parkvorgangs Fahrereingriffe (z.B. Bremseingriffe, Lenkeingriffe, Eingriffe an einer Nutzerschnittstelle etc.) und/oder physische Daten (z.B. Pulsfrequenz, Gesichtsausdruck, Bewegungen, Hauttemperatur, Hautfeuchtigkeit, Hautfarbe etc.) des Fahrers ermittelt und Parkparameter des Parkassistenzsystems werden abhängig von dem Auftreten von Fahrereingriffen bzw. den erfassten physischen Daten angepasst. Wird beispielsweise über zumindest einen Fahrereingriff erkannt, dass das Vertrauen in den vom Parkassistenzsystem durchgeführten Parkvorgang nicht gegeben ist, können die Parkparameter beispielsweise hin zu einem höheren Sicherheitsempfinden (z.B. höhere Abstände zu umliegenden Objekten, geringere Geschwindigkeit etc.) angepasst werden.

In umgekehrter Weise ist es natürlich auch möglich, die Parkparameter beispielsweise zu einem geringeren Sicherheitsempfinden (z.B. niedrigere Abstände zu umliegenden Objekten, höhere Geschwindigkeit etc.) hin anzupassen.

Gemäß einem weiteren Aspekt betrifft die Erfindung ein Fahrzeug umfassend ein Parkassistenzsystem zum Steuern eines Parkvorgangs des Fahrzeugs. Das Fahrzeug umfasst:

- Identifikationsmittel zum Identifizieren eines Fahrers;
- Sensormittel zum Erfassen von Fahrerparametern während eines vom Fahrer durchgeführten Parkvorgangs; wobei ein Parkvorgang ein Vorgang ist, bei dem ein Fahrzeug vorwärts, rückwärts, seitwärts oder schräg in eine Parklücke manövriert wird;

- zumindest eine Speichereinheit zum Speichern der Fahrerparameter, wobei die Fahrerparameter dem identifizierten Fahrer zugeordnet gespeichert werden;
- zumindest eine Rechnereinheit, die zum Bestimmen von Parkparametern basierend auf den erlernten Fahrerparametern ausgebildet ist; wobei der Schritt des Erlernens von Fahrerparametern das Erfassen der Fahrzeuggeschwindigkeit, des Lenkwinkels, einer Lenkwinkelgeschwindigkeit, zumindest eines Abstandswerts eines Objekts relativ zum Fahrzeug (1) im Umgebungsbereich des Fahrzeugs (1) und Beschleunigungs- bzw. Verzögerungsparameter des Fahrzeugs (1) umfasst;
- Sukzessive Anpassung der Parkparameter abhängig von der Anzahl der durch ein Parkassistenzsystem durchgeführten und dem identifizierten Fahrer zugeordneten Parkvorgänge, wobei progressive bzw. degressive Veränderungen der Parkparameter in Abhängigkeit von der Anzahl von automatisiert durchgeführten Parkvorgängen möglich sind, und
- ein Parkassistenzsystem, das zum automatisierten Steuern des Parkvorgangs des Fahrzeugs basierend auf den Parkparametern ausgebildet ist.

Unter "Parkvorgang" im Sinne der vorliegenden Erfindung werden Vorgänge verstanden bei denen ein Fahrzeug vorwärts, rückwärts, seitwärts oder schräg in eine Parklücke manövriert wird. Parkvorgänge umfassen dabei sowohl Einparkvorgänge als auch Ausparkvorgänge. Dabei kann sich der Fahrer beim Parkvorgang im Fahrzeug befinden oder der Fahrer kann außerhalb des Fahrzeugs sein (Remote-Parkvorgang).

Unter "Fahrerparametern" im Sinne der vorliegenden Erfindung werden jegliche Parameter verstanden, basierend auf denen eine Beurteilung eines fahrerspezifischen Parkverhalten möglich ist.

Unter "Parkparametern" im Sinne der vorliegenden Erfindung werden Parameter verstanden, mittels denen entweder direkt ein Parkassistenzsystem adaptiert werden kann oder aus denen Informationen abgeleitet werden können, mittels denen eine Adaptierung des Parkassistenzsystems möglich ist.

Die Ausdrücke "näherungsweise", "im Wesentlichen" oder "etwa" bedeuten im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren.

Die Erfindung wird im Folgenden anhand der Figuren an Ausführungsbeispielen näher erläutert. Es zeigen:

Fig. 1    beispielhaft und schematisch eine Seiten-Einparksituation eines Fahrzeugs von einer Startposition in eine Parkposition;

Fig. 2    beispielhaft und schematisch eine Tabelle, die eine Vielzahl von Fahrerparametern enthält, die nach einem Parkvorgang erhalten wurden;

Fig. 3    beispielhaft und schematisch eine Tabelle, die eine Vielzahl von Fahrerparametern enthält, die durch eine Vielzahl von Parkvorgängen erhalten wurden;

Fig. 4    beispielhaft und schematisch eine Seiten-Einparksituation eines Fahrzeugs von einer Startposition in eine Parkposition, an der drei Genauigkeitszonen vorgesehen sind;

Fig. 5    beispielhaft und schematisch eine Seiten-Einparksituation eines Fahrzeugs in eine Parkposition, wobei durch den nach vorne gerichteten Pfeil ein Ausrichtungswinkel des Fahrzeugs beim Erreichen der Parkposition angedeutet ist;

Fig. 6    beispielhaft eine Tabelle, aus der ein fahrerspezifisches Parkverhalten in Form von zusätzlichen Parkzügen zum Einnehmen einer verbesserten Parkposition hervorgeht;

Fig. 7    beispielhaft eine Tabelle, aus die Anzahl von Parkzügen eines Fahrers zum Einnehmen einer verbesserten Parkposition nach einer Vielzahl von vom Fahrer durchgeführten Parkvorgängen hervorgeht;

Fig. 8    beispielhaft und schematisch eine Darstellung einer Parksituation in einer Parklücke für behinderte Menschen;

Fig. 9    beispielhaft und schematisch eine Seiten-Einparksituation, bei der ein Fahrzeug beim Einparken auf einen Bordstein hinaufgefahren wird, um auf diesem zu parken;

Fig. 10    beispielhaft und schematisch eine Schräg-Vorwärts-Einparksituation; und

Fig. 11    beispielhaft und schematisch die Reaktion eines Parkassistenzsystems auf eine durch ein weiteres parkendes Fahrzeug veränderte Parksituation.

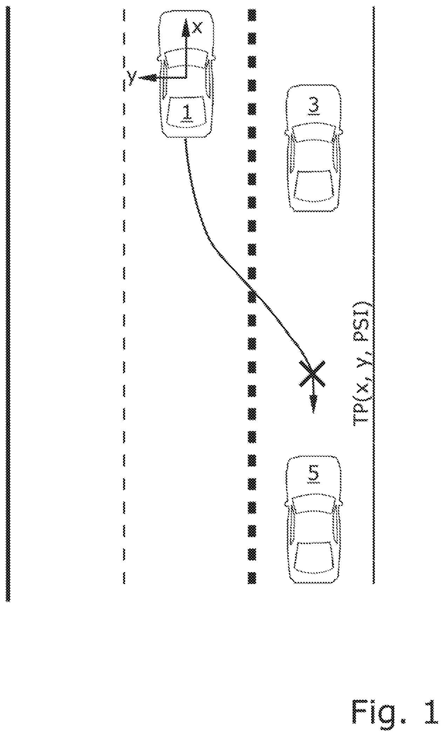

Figur 1 zeigt einen rückwärtsgerichteten seitlichen Parkvorgang von einem aktuellen Standort des Fahrzeugs in eine Parkposition TP(x, y, PSI).

Erlernen von Fahrerparametern

Unterschiedliche Fahrer weisen ein unterschiedliches Parkverhalten (Geschwindigkeit, Sicherheitsabstände, gewählter Weg in die Parklücke) auf. Um ein natürliches Parkverhalten des Parkassistenzsystems für jeden Fahrer sicherzustellen, lernt die Parkassistenzfunktion Fahrerparameter während eines vom Fahrer durchgeführten Parkvorgangs, und berechnet anschließend Parameter, nachfolgend Parkparameter genannt, für die Parkassistenzfunktion von diesen gelernten Fahrerparametern. Die Parkassistenzfunktion wird anschließend basierend auf den Parkparametern angepasst, um ein natürliches Parkverhalten für jeden Fahrer zu erhalten.

Anpassen des Parkassistenzsystems an einen Vertrauensniveau des Fahrers

Das Parkassistenzsystem berücksichtigt vorzugsweise ebenfalls, dass der Fahrer bei einer ersten Nutzung des Parkassistenzsystems ein geringes Vertrauen in die Funktion hat, das später jedoch ansteigt. Zu Beginn ist ein Fahrer üblicherweise besorgt, wenn beispielsweise das Fahrzeug sich sehr nahe an Objekte in der Umgebung heranbewegt und nach einer längeren Nutzung der Parkassistenzfunktion gewinnt der Fahrer Vertrauen in diese Funktion. Vorteilhafterweise werden Parameter der Parkassistenzfunktion über die Zeit von einem auf Sicherheit bedachten Funktionszustand in einen auf höhere Performance ausgelegten Funktionszustand überführt.

Das Parkassistenzsystem umfasst vorzugsweise einen Lernalgorithmus, der dazu ausgebildet ist, die Parameter des Parkassistenzsystems in Richtung höhere Sicherheit, bzw. einen auf Sicherheit bedachten Funktionszustand zu bringen, und zwar nämlich dann, wenn das Parkassistenzsystem feststellt, dass sich ein Fahrer bei einem vom Parkassistenzsystem durchgeführten Parkvorgang unsicher fühlt. Dabei werden beispielsweise Fahrereingriffe (zum Beispiel Bremsen, Lenken, Steuereingriffe an einer Benutzerschnittstelle des Parkassistenzsystems) während des vom Parkassistenzsystem durchgeführten Parkvorgangs erfasst und ausgewertet. Zusätzlich kann vorzugsweise der Stress-Level des Fahrers gemessen werden, um daraus ebenfalls Rückschlüsse zu ziehen, wie sicher sich der Fahrer bei einem vom Parkassistenzsystem durchgeführten Parkvorgang fühlt. Dabei können beispielsweise durch eine im Fahrzeuginnenraum befindliche die Kamera der Gesichtsausdruck, Bewegungen, die Hauttemperatur, die Hautfeuchtigkeit und/oder die Hautfarbe des Fahrers ausgewertet werden. Alternativ oder zusätzlich können beispielsweise im Fahrersitz Sensoren vorgesehen sein, um die Herzfrequenz des Fahrers messen zu können.

Anpassung der Parkassistenzfunktion an fahrerspezifische, bevorzugte Einstellungen

Eine bekannte Funktion ist die Identifikation des Fahrers des Fahrzeugs durch dessen eigenen Schlüssel oder eine schlüssellose Zutrittskarte.

Gemäß dem Stand der Technik wird beispielsweise die Sitzpositionseinstellung gemäß den persönlichen Vorzügen des Fahrers eingestellt, wenn dieser die Tür des Fahrzeugs mit seinem persönlichen Schlüssel öffnet. Die gesamte Parkassistenzfunktion wird vorzugsweise personalisiert, um sich an die spezifischen Fahrerbedürfnisse anzupassen. Beispielsweise können die folgenden Parkassistenzfunktions-Einstellungen für den jeweiligen Fahrer des Fahrzeugs getroffen werden:

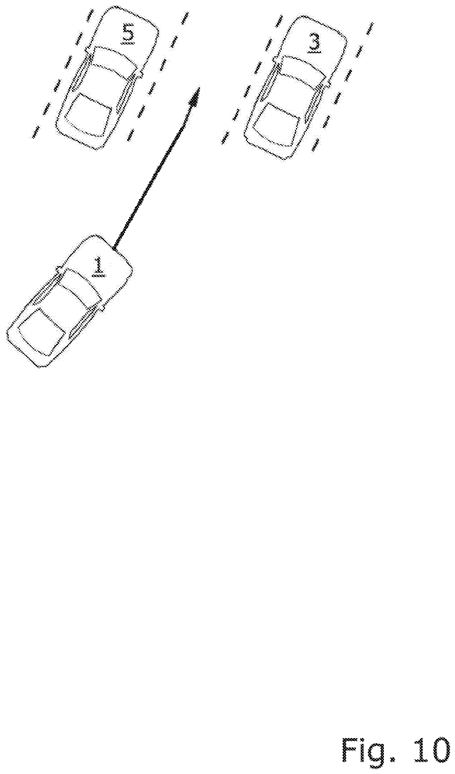

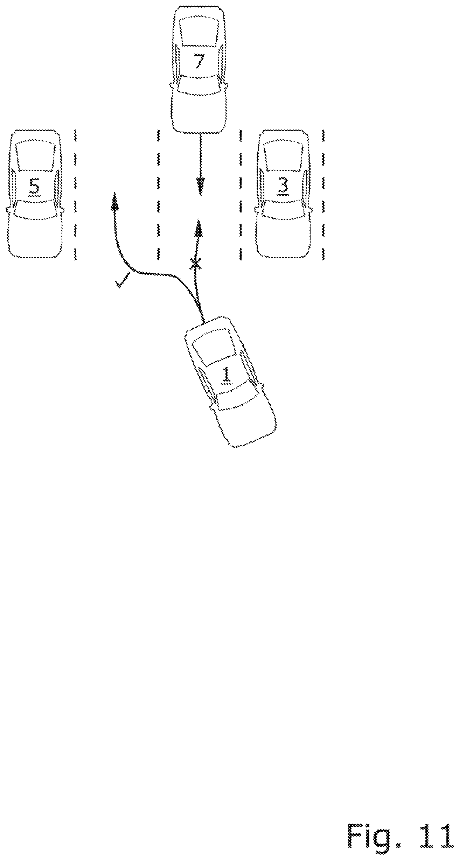

- Auswählbarkeit von Parken auf Behinderten-Parkplätzen: die Parkassistenzfunktion bietet auch oder insbesondere Parkplätze für behinderte Personen an;
- Ausführbarkeit von Parken auf Frauenparkplätzen: die Parkassistenzfunktion bietet auch oder insbesondere Parkplätze an, die für Frauen reserviert sind;
- Bereitschaft, für Parkplätze zu zahlen: die Parkassistenzfunktion bietet auch Parkplätze an, die gebührenpflichtig sind;
- Ausführbarkeit von Anwohnerparkplätzen: die Parkassistenzfunktion bietet ein derartiges Parken an, wenn der Fahrer durch Ortskoordinaten seine Anwohner-Umgebung festgelegt hat. Die Parkassistenzfunktion fragt vorzugsweise nach einer Bestätigung, wenn diese gewohnt ist, außerhalb der Anwohner-Parkplätze zu parken;
- Einschalten von Parkeinstellungen: Bereitschaft, Randsteine zu überfahren; Parken vor bzw. hinter einzelnen Fahrzeugen; Bereitschaft für ein "direktes Vorwärtseinparken" durch die Parkfunktion (s. Fig. 10); Bereitschaft zur Reaktion auf Änderung der Parksituation während des Einparkvorgangs, beispielsweise durch Auswählen einer alternativen Parklücke (s. Fig. 11);
- bevorzugte Parkrichtung: vorwärts oder rückwärts bei einer Parklücke senkrecht zur Fahrtrichtung.

Der Fahrer kann beispielsweise all diese Parameter konfigurieren, bevor er die Parkassistenzfunktion nutzt. Dies ist jedoch bei den meisten Fahrern unerwünscht. Eine andere Option ist, dass der Fahrer bei einer ersten Erkennung einer Parklücke mit speziellen Eigenschaften danach gefragt wird, ob diese ausgewählt werden soll. So kann beispielsweise dann, wenn eine Parklücke für Parken von behinderten Menschen erkannt wird, ein Hinweis an den Fahrer ergehen, dass eine Parklücke für behinderte Menschen erkannt wurde und abgefragt werden, ob der Fahrer zum Parken in einer solchen Parklücke berechtigt ist.

Erlernen von Fahrerparametern

Erster Schritt - Detektieren eines vom Fahrer durchgeführten Parkvorgangs

1.1 Die Detektion eines vom Fahrer durchgeführten Parkvorgangs wird durch die folgende Logik gestartet:

1) Eine Parklückenerkennungslogik der Parkassistenzfunktion erkennt eine passende Parklücke, und
2) Das Fahrzeug hat zumindest einen Mindestabstand (in x- und y-Richtung) zu dieser Parklücke, und
3) Das Fahrzeug ist weniger als einen Maximalabstand (in x- und y-Richtung) von dieser Parklücke entfernt; und
4) Das Fahrzeug wird nicht bewegt/steht.

Falls diese Bedingungen erfüllt sind, berechnet ein Trajektorien-Planer die Anzahl der benötigten Parkzüge zu zumindest einer erkannten Parklücke.

Figur 1 zeigt eine Zielposition (target pose TP) und ein Fahrzeug 1 in einem auf das Fahrzeug bezogenen x-y-Koordinatensystem. Die Zielposition liegt im gezeigten Ausführungsbeispiel zwischen zwei Fahrzeugen 3, 5.

1.2 Das Lernen der Fahrerparameter startet bzw. wird fortgesetzt, nachdem

1) Der erste Gang ist eingelegt (bei Schaltgetriebe) oder bei Automatikgetriebe Fahrstellung "D" oder der Rückwärtsgang bzw. Fahrstellung "R" (bei Automatikgetriebe) ist eingelegt; und
2) Das Fahrzeug wird mit einer Fahrzeuggeschwindigkeit unter einer Maximalgeschwindigkeit bewegt, die beispielsweise 10 km/h betragen kann.

1.3 die Lernfunktion wird gestoppt und die erlernten Fahrerparameter werden abgespeichert, wenn

1) das Fahrzeug wurde in eine der erkannten, gültigen Parklücken geparkt und die Überdeckung des Fahrzeugs mit der Fläche der erkannten Parklücke beträgt einen Mindestwert, beispielsweise 70 %, und
2) die Anzahl der Parkzüge, die der Fahrer zum Manövrieren des Fahrzeugs in die Parklücke benötigt hat, liegt unter einer maximalen Anzahl von Parkzügen, beispielsweise ist kleiner als 3; und
3) die während des Einparkvorgang aufgetretenen maximalen Beschleunigungswerte (negativ beim Bremsen, positiv beim Beschleunigen) sind innerhalb eines Sollwertbereichs, beispielsweise in einem Bereich zwischen -4 m/s$^2$ und 4m/s$^2$.

Dadurch wird erreicht, dass lediglich "gut" durchgeführte Parkvorgänge für das Anlernen der Parkassistenzfunktion verwendet werden. Dadurch werden beispielsweise vom Fahrer durchgeführte Parkvorgänge mit zu vielen Parkzügen oder Parkvorgänge mit einem zu abrupten Abbremsen aus dem Lernvorgang ausgeschlossen.

Zweiter Schritt - Lernen von Fahrerparametern

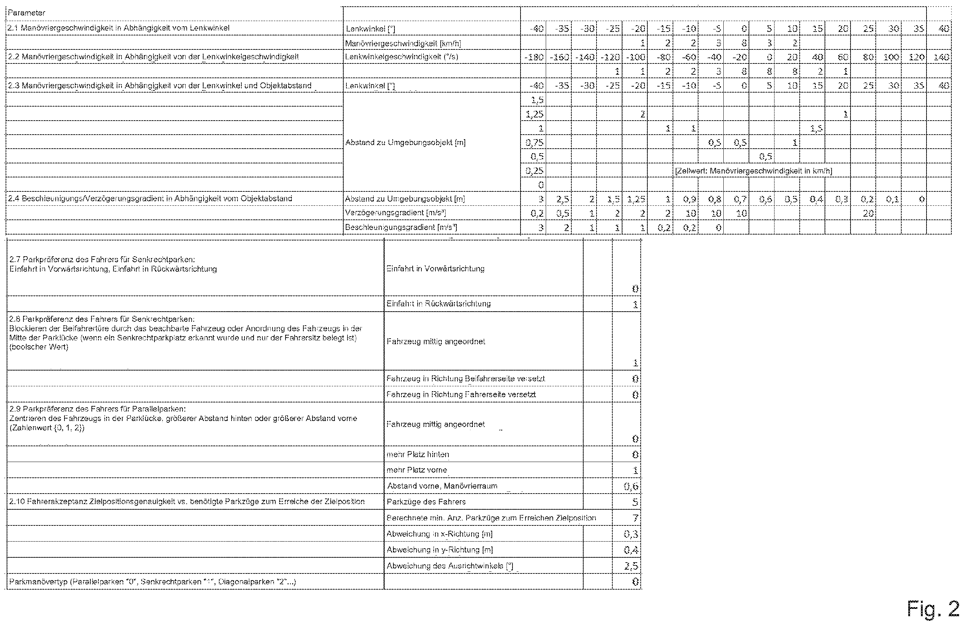

Dieser Schritt wird vorzugsweise so lange durchgeführt, wie die zuvor genannte Bedingung 1.2 gültig ist. Während der Lernphase werden die nachfolgend genannten Parameter-Arrays mit Werten befüllt, die durch eine Abtastung mit einer Abtastrate, beispielsweise zwischen 10ms und 1sec, insbesondere 100ms erhalten wurden. Die Felder der einzelnen Parameter-Arrays enthalten nach der Lernphase jeweils einen Durchschnittswert, der durch Mittelung über alle Abtastwerte erhalten wird.
Insbesondere werden folgende Fahrerparameter erfasst (s. Fig. 2):

2.1 Manövriergeschwindigkeit in Abhängigkeit vom Lenkwinkel;
2.2 Manövriergeschwindigkeit in Abhängigkeit von der Lenkwinkelgeschwindigkeit;
2.3 Manövriergeschwindigkeit in Abhängigkeit vom Lenkwinkel und dem Abstand von zumindest einem Umgebungsobjekt;
2.4 Beschleunigungs- / Abbremsens-Gradient in Abhängigkeit vom Abstand zu zumindest einem Umgebungsobjekt;

Am Ende des Schritts 1.3 werden zudem die folgenden Werte gespeichert:

2.7 vom Fahrer bevorzugte Parkrichtung bei Senkrecht-Parkplätzen: Einfahrt in Parklücke vorwärts, Einfahrt in Parkrichtung rückwärts (Boolscher Wert);
2.8 vom Fahrer bevorzugte Anordnung des Fahrzeugs in der Parklücke bei Senkrecht-Parkplätzen: blockieren der Beifahrertür des eigenen Fahrzeugs bzw. des Nebenfahrzeugs oder Zentrieren des Fahrzeugs in der Parklücke (boolscher Wert);
2.9 vom Fahrer bevorzugte Anordnung des Fahrzeugs in der Parklücke bei Parallel-Parkplätzen: Zentrierung des Fahrzeugs in der Parklücke oder einhalten einer größeren Lücke vor bzw. hinter dem eigenen Fahrzeug ( beispielsweise kodiert durch Zahlenwerte 0, 1, 2)
2.10 vom Fahrer gewünschte Parkgenauigkeit (d.h. Erreichen einer Soll-Parkposition) vs. Anzahl der aufgewandten Parkzüge.

Die Parkassistenzsystem speichert vorzugsweise zusätzlich die folgenden Informationen:

- Parkzüge für das vom Fahrer durchgeführte Parkmanöver;
- berechnete Mindestanzahl von Parkzügen zum Erreichen der exakten Parkposition (Soll-Parkposition) durch das Parkassistenzsystem;

- die Abweichung der vom Fahrer eingenommenen Parkposition von der berechneten Soll-Parkposition (beispielsweise Abweichung in x- und y- Richtung sowie im Ausrichtungswinkel des Fahrzeugs (bezogen auf einen Soll-Ausrichtungswinkel).

Am Ende des zweiten Schritts wurde ein Satz von Fahrerparametern für ein Parkmanöver erlernt (s. Parametersatz gemäß Fig. 2). Dieser Satz von Parametern wird gespeichert und in einer Lernfunktion für eine Vielzahl von Parkmanövern im nächsten Schritt benutzt.

Zusätzlich zu diesen Parametern kann auch der Parkvorgangstyp (z.B. Senkrechtparken, Parallelparken, Schrägparken etc.) gespeichert werden.

Dritter Schritt - Berechnung von Parkparametern zum Adaptieren des Parkassistenzsystems basierend auf Fahrerparametern aus mehreren Parkmanövern

In diesem Schritt werden die Daten, die in mehreren Parkmanövern ermittelt wurden, ausgewertet, um ein generelles bzw. im Mittel eingenommenes Fahrverhalten des Fahrers für die Anpassung der Parameter des Parkassistenzsystems zu erhalten.

Für die zuvor in Ziffern 2.1 bis 2.9 ermittelten Parameter:

1) eine Anzahl von benötigten, vom Fahrer selbst durchgeführten Parkmanövern wird festgelegt, um Parkparameter zu erlernen;
2) Durchschnittswerte der gespeicherten Fahrerparameter werden berechnet;
3) Es wird eine statistische Signifikanz ermittelt, um festzustellen, ob der Fahrerparameter zur Anpassung des Parkassistenzsystems zu verwenden ist oder nicht.

Beispiel:

| 2.7 bevorzugte Parkeigenschaften des Fahrers bei Senkrechtparken: Einfahren vorwärts, Einfahren rückwärts | Einfahren vorwärts | 1 |
|---|---|---|
| | Einfahren rückwärts | 9 |

→ das Setzen eines die statistische Signifikanz angebenden Wertes auf logisch 1 ("wahr") bedeutet, dass die erlernten Fahrerparameter für die Anpassung der Funktion verwendet werden können (hier aufgrund des klaren Präferierens des Rückwärtseinparkens).

| 2.8 bevorzugte Parkeigenschaften des Fahrers: Blockieren der Beifahrertür durch das benachbarte Fahrzeug oder Zentrieren des Fahrzeugs in der Parklücke (bei Senkrechtparken und keiner Person auf Beifahrersitz) | Fahrzeug zentriert | 4 |
|---|---|---|
| | Fahrzeug in Richtung Beifahrerseite versetzt | 3 |
| | Fahrzeug in Richtung Fahrerseite versetzt | 3 |

→ das Setzen eines die statistische Signifikanz angebenden Wertes auf logisch 0 ("nicht wahr") bedeutet, dass die erlernten Fahrerparameter für die Anpassung der Funktion nicht verwendet werden können (hier aufgrund keines klaren Präferierens einer Ausrichtung des Fahrzeugs in der Parklücke).

Die erlernten Parameter fließen lediglich dann in die Anpassung des Parkassistenzsystems ein, wenn:

a) Die Anzahl der vom Fahrer durchgeführten Parkmanöver größer ist als eine geforderte Mindestanzahl; und
b) Der die statistische Signifikanz angebenden Wert für den jeweiligen Parameter angibt, dass der Parameter statistisch signifikant ist und sich damit zur Anpassung des Parkassistenzsystems eignet.

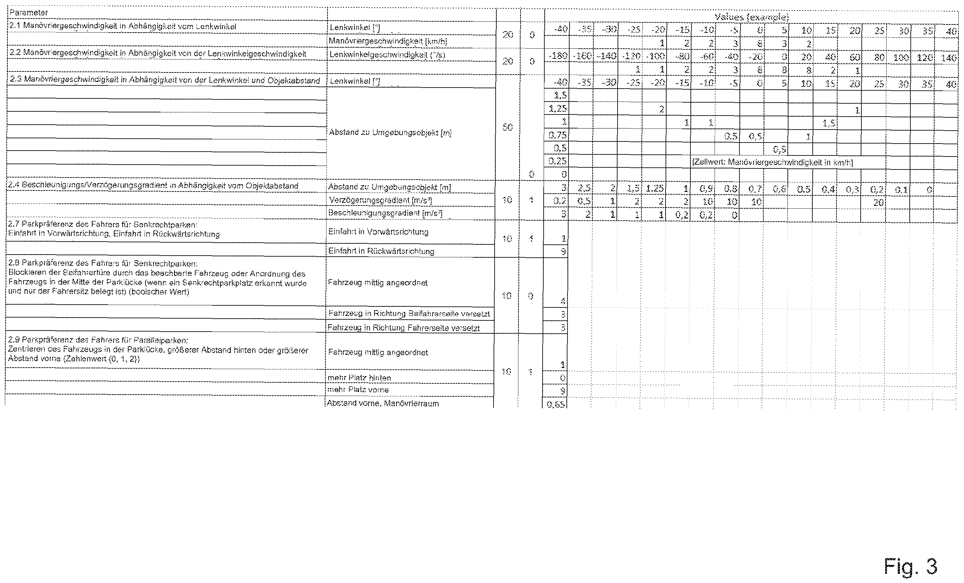

Figur 3 zeigt beispielhaft einen erlernten Parametersatz nach einer Vielzahl von Parkmanövern.

Für den zuvor genannten Schritt 2.10 "vom Fahrer gewünschte Parkgenauigkeit (d.h. Erreichen einer Soll-Parkposition) vs. Anzahl der aufgewandten Parkzüge" ist das Lernverfahren aufwändiger. Die Lernfunktion definiert zunächst n Genauigkeitszonen um die Soll-Parkposition herum, wobei n eine natürliche Zahl ist. Die Genauigkeit in x- und y-Richtung und die Abweichung eines Ausrichtungswinkels (jeweils gemessen zwischen der Ego-Position des Fahrzeugs, zu der das Fahrzeug vom Fahrer manövriert wurde und der Soll-Parkposition) kann durch das Parkassistenzsystem wie folgt bestimmt werden:

Für n=3 gilt:

"Hochgenau in x-Richtung", wenn gilt:

$$|ego\text{-}fahrzeug\_x - TP\_x| < delta\_x\_hochgenau;$$

"durchschnittlich genau in x-Richtung", wenn gilt:

$$|ego\text{-}fahrzeug\_x - TP\_x| < delta\_x\_mittel;$$

"niedrige Genauigkeit in x-Richtung", wenn gilt:

$$|ego\text{-}fahrzeug\_x - TP\_x| < delta\_x\_niedrig;$$

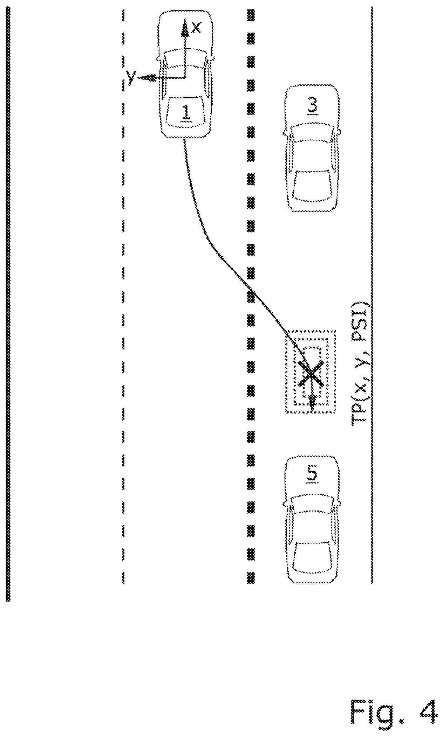

Das gleiche gilt für die Bestimmung der Genauigkeit in y-Richtung. Figur 4 zeigt die x/y-Genauigkeitszonen durch gestrichelte Rechtecke. Die gleichen Genauigkeitsklassen gelten ebenso für den Ausrichtungswinkel des Fahrzeugs.

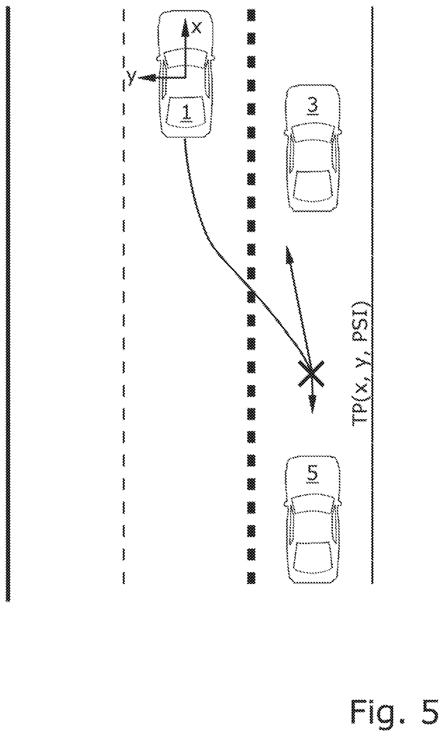

Figur 5 zeigt die Abweichung des Ausrichtungswinkels an der Zielposition TP.

Die grundlegende Idee des Algorithmus ist zu lernen:

- wie viele zusätzliche Parkzüge wendet der Fahrer auf, um eine Verbesserung der finalen Parkposition in x-Richtung zu erreichen;
- wie viele zusätzliche Parkzüge wendet der Fahrer auf, um eine Verbesserung der finalen Parkposition in y-Richtung zu erreichen;
- wie viele zusätzliche Parkzüge wendet der Fahrer auf, um eine Verbesserung der finalen Parkposition in Bezug auf den Ausrichtwinkel zu erreichen;

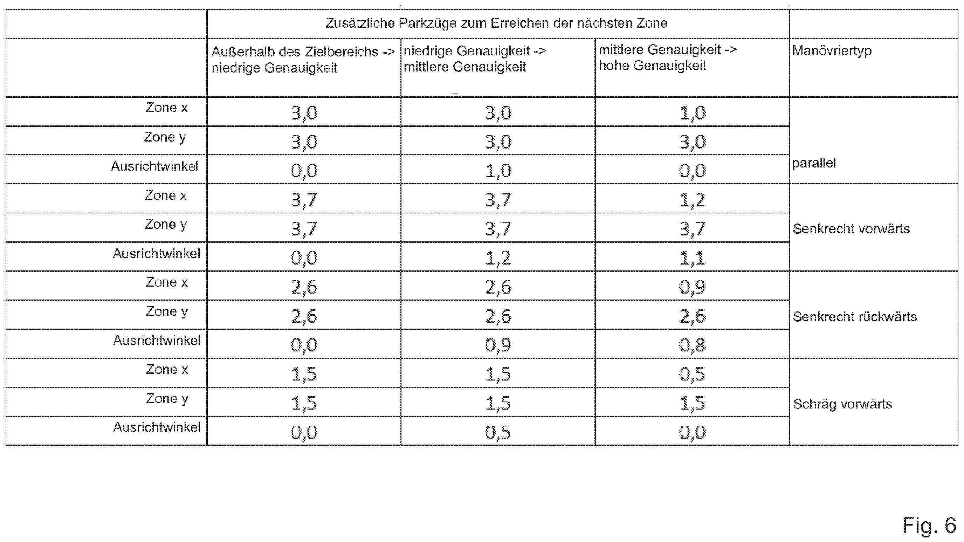

Eine resultierende Tabelle, die die fahrerspezifische Akzeptanz zusätzlicher Parkzüge zum Erreichen einer höheren Parkgenauigkeit angibt, könnte wie in Fig. 6 dargestellt aussehen.

Dabei arbeitet der Lernalgorithmus beispielsweise wie folgt:

1) Das Parkassistenzsystem erkennt das vom Fahrer durchgeführte Manövrieren des Fahrzeugs in eine Parklücke;
2) Die Soll-Parkposition (Zielposition TP) wird durch das Parkassistenzsystem berechnet;
3) Nach dem Durchführen eines Parkzuges durch den Fahrer wird ermittelt, ob sich die x/y-Koordinaten des Fahrzeugs zumindest in der niedrigsten Genauigkeitszone befinden. Die Anzahl der Parkzüge, die zum Erreichen der niedrigsten Genauigkeitszone benötigt wurden, werden aufgezeichnet/gespeichert;
4) Danach wird die Anzahl der Parkzüge zum Erreichen einer höheren Genauigkeitszone ermittelt, und zwar jeweils für x- und y-Richtung und den Ausrichtwinkel des Fahrzeugs. Die Anzahl der Parkzüge zum Erreichen einer höheren Genauigkeitszone werden getrennt für x- und y-Richtung und den Ausrichtwinkel des Fahrzeugs gespeichert;
5) Eine Plausibilitätsfunktion berechnet die Anzahl der Parkzüge, die das Parkassistenzsystem zum Erreichen der höheren Genauigkeitszone benötigt hätte. Wenn der Fahrer signifikant mehr Parkzüge benötigt als das Parkassistenzsystem (beispielsweise 50% oder mehr), wird die berechnete Anzahl anstelle der tatsächlich benötigten Anzahl an Parkzügen verwendet.
6) Wenn erkannt wird, dass die finale Parkposition eingenommen wurde (beispielsweise durch Ausschalten der Zündung), wird die Tabelle unter Zuordnung des Typs von Parkmanöver (Parallelparken, Senkrechtparken, Schrägparken, etc.) gespeichert.

Eine derartige Tabelle, wie sie in Fig. 6 gezeigt ist, wird für jedes vom Fahrer durchgeführtes Parkmanöver gespeichert. Nachdem eine gewisse Anzahl von relevanten, vom Fahrer ausgeführten Parkvorgängen (Parallelparken, Senkrechtparken, Schrägparken, etc.) durchgeführt wurden, wird ein Durchschnittswert der Parkzüge berechnet.

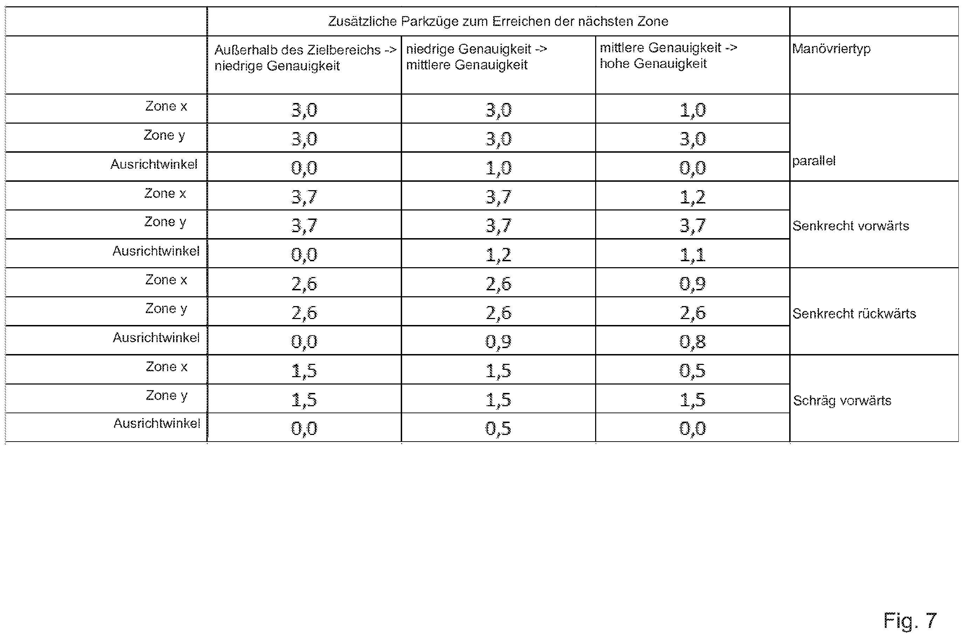

Fig. 7 zeigt beispielhaft eine Tabelle, die die fahrerspezifische Akzeptanz zusätzlicher Parkzüge zum Erreichen einer höheren Parkgenauigkeit nach mehreren vom Fahrer durchgeführten Parkmanövern angibt.

Ein zweites Flag (beispielsweise in Form eines boolschen Werts) gibt an, ob ein erkannter Wert aussagekräftig ist oder nicht. Diese Kennung gibt an, ob die vom Fahrer aufgewendete Anzahl von Parkzügen von der Anzahl der Parkzüge abweicht, die das Fahrassistenzsystem benötigen würde. Wenn dieses Flag gesetzt ist (beispielsweise auf logisch "1") wird die für dieses Parkmanöver aufgewandte Genauigkeit (in x- und y-Richtung und Ausrichtwinkel) auf den Wert abgesenkt, der durch das Fahrerverhalten ermittelt wurde.

Beim Einparken mit dem Parkassistenzsystem wird fortwährend ermittelt, ob die Soll-Parkposition (Zielposition TP) bereits erreicht wurde (ggf. mit einem gewissen Toleranzbereich). Wenn die Soll-Parkposition erreicht wurde, wird die automatisierte Parkfunktion beendet (beispielsweise auch begleitet durch eine Ausgabe an einer Benutzerschnittstelle, durch Betätigen der Parkbremse etc.).

Die automatische Parkfunktion des Parkassistenzsystems wird basierend auf den erlernten Genauigkeitsinformationen wie folgt adaptiert: Wenn die erste, niedrige Genauigkeitszone für die Ortskoordinaten in x- und y-Richtung erreicht ist, berechnet die Parkassistenzfunktion die Anzahl der benötigten Parkzüge, um die nächste Genauigkeitszone zu erreichen. Wenn diese berechnete Anzahl niedriger ist als der durch das Fahrerverhalten erlernte Wert, setzt die Parkassistenzfunktion den automatisierten Parkvorgang weiter fort. Wenn jedoch die berechnete Anzahl (deutlich) über dem durch das Fahrerverhalten erlernten Wert liegt, wird die Parkassistenzfunktion nicht weiter versuchen, die Parkgenauigkeit weiter zu verbessern. Es versteht sich, dass für den Fall, dass die Genauigkeit in x-Richtung beispielsweise ausreichend ist, die Genauigkeit in y-Richtung jedoch verbessert werden muss, die Parkzüge, die zur Verbesserung der Genauigkeit in y-Richtung benötigt werden, auch dazu benutzt werden, die Parkgenauigkeit in x-Richtung weiter zu erhöhen. Das Verfahren wird so lange wiederholt, bis die Position des Fahrzeugs in x- und y-Richtung in einem akzeptierbaren Bereich liegen, d.h. aus den erlernten Informationen ergibt sich, dass der Fahrer keine weiteren Parkzüge zur Verbesserung der Parkgenauigkeit akzeptieren würde.

Abschließend wird der Ausrichtwinkel des Fahrzeugs geprüft. Dabei wird ein ähnliches Verfahren angewandt: Wenn die Anzahl der benötigten Parkzüge für eine Verbesserung um eine Ausrichtwinkelklasse (beispielsweise eine Verbesserung um mindestens 2°) zu groß ist, wird das Parkassistenzsystem den automatisierten durchgeführten Parkvorgang beenden. Für den Fall, dass eine Verbesserung des Ausrichtwinkels zu einer Verschlechterung der Ausrichtung in x- bzw. y-Richtung führt (beispielsweise in Form einer niedrigeren Genauigkeitszone), wird ein ähnliches Verfahren angewandt: die Verbesserung wird lediglich dann durchgeführt, wenn durch eine vom Fahrer akzeptierte Anzahl von Parkzügen eine Gesamtverbesserung der final eingenommenen Parkposition erreichbar ist.

Anpassung der Trajektorienplanung

Die zuvor genannten Parameter 2.1 bis 2.4 werden dazu benutzt, die Trajektorienplanung und Trajektoriensteuerung anzupassen.

Die Trajektorie des Fahrzeugs ist beispielsweise eine x/y-Koordinatenliste mit Geschwindigkeitswerten, die jedem Koordinateneintrag dieser Liste zugeordnet sind. Das Geschwindigkeitsprofil und die Krümmung dieser Trajektorie definieren die Längs- und Querbeschleunigung des Fahrzeugs, den Lenkwinkel und die Lenkwinkelgeschwindigkeit. Die Parameter der Trajektorie, die bei dem automatisierten Parkvorgang verwendet wird, wird basierend auf den erlernten Fahrerparametern angepasst. So wird beispielsweise bei einer im Vergleich zu den Fahrerparametern zu hohen Beschleunigung bzw. Verzögerung in Längsrichtung das Geschwindigkeitsprofil der vom Parkassistenzsystem berechneten Trajektorie angepasst. Im Falle einer zu hohen seitlichen Beschleunigung wird beispielsweise das Geschwindigkeitsprofil der vom Parkassistenzsystem berechneten Trajektorie in Abhängigkeit von der Krümmung der Trajektorie angepasst.

Der die Trajektorie planende Algorithmus plant zudem vorzugsweise die Trajektorie unter Berücksichtigung der Sicherheitsabstände zu Objekten im Umgebungsbereich, insbesondere statischen Objekten. Die Manövriergeschwindigkeit in Abhängigkeit von dem Abstand zu statischen Objekten kann gemäß den erlernten Fahrerparametern angepasst werden. So kann beispielsweise für den Fall, dass sich aus den Fahrerparametern ergibt, dass ein Fahrer das Fahrverhalten des Parkassistenzsystems derart wahrnimmt, dass es zu schnell auf Umgebungsobjekte zu fährt, zu einer Reduktion der Geschwindigkeit führen. Diese Anpassung kann beispielsweise auch auf die Lenkwinkelgeschwindigkeit Einfluss nehmen. So kann bei einer Reduzierung der Geschwindigkeit auch die Lenkwinkelgeschwindigkeit reduziert werden.

Wenn sich aus den Fahrerparametern eine Wahrnehmung des Fahrers ergibt, dass der Lenkwinkel in der Nähe von Objekten zu groß ist, kann der Trajektorienplaner des Parkassistenzsystems eine maximale Krümmung der Trajektorie in der Nähe eines Objekts nutzen.

Anpassung der Parkassistenzfunktion an das Vertrauen des Fahrers in das System

a) Anpassung der Parkparameter an ein gestiegenes Vertrauen in das Parkassistenzsystem

Das Parkassistenzsystem passt vorzugsweise die folgenden Parameter für jeden erfolgreich durchgeführten, automatisierten Parkvorgang an:

- Sicherheitsabstand in Längsrichtung zu statischen Objekten (beispielsweise anderen Fahrzeugen);
- seitlicher Sicherheitsabstand zu statischen Objekten (beispielsweise anderen Fahrzeugen);
- Beschleunigung/Verzögerungsgradienten in Abhängigkeit vom Abstand zu den Objekten in der Umgebung;
- Manövriergeschwindigkeit in Abhängigkeit vom Lenkwinkel;
- Manövriergeschwindigkeit in Abhängigkeit von der Lenkwinkelgeschwindigkeit;
- Manövriergeschwindigkeit in Abhängigkeit vom Lenkwinkel und dem Abstand zu Umgebungsobjekten.

Bei der ersten Nutzung des Parkassistenzsystems bzw. der Parkassistenzfunktion werden beispielsweise die folgenden Werte durch Aufaddieren eines Sicherheitswerts oder durch Multiplizieren mit einem Sicherheitsfaktor erhöht:

- Sicherheitsabstand in Längsrichtung zu statischen Objekten (beispielsweise anderen Fahrzeugen);
- seitlicher Sicherheitsabstand zu statischen Objekten (beispielsweise anderen Fahrzeugen);

Bei der ersten Nutzung des Parkassistenzsystems bzw. der Parkassistenzfunktion werden beispielsweise die folgenden Werte durch auf Abziehen eines Sicherheitswerts oder durch Multiplizieren mit einem Sicherheitsfaktor verringert:

- Beschleunigungs- /Verzögerungsgradienten in Abhängigkeit vom Abstand zu den Objekten in der Umgebung;
- Manövriergeschwindigkeit in Abhängigkeit vom Lenkwinkel;
- Manövriergeschwindigkeit in Abhängigkeit von der Lenkwinkelgeschwindigkeit;
- Manövriergeschwindigkeit in Abhängigkeit vom Lenkwinkel und dem Abstand zu Umgebungsobjekten.

Zudem kann ein Parameter "AP_use_cases_for_final_confidence" auf einen vordefinierten Wert gesetzt, beispielsweise auf den Wert 100.

Zudem kann eine Schrittweite S für einen Parameter delta_parameter_xx wie folgt berechnet werden:

$$S = delta\_parameter\_xx \, / \, AP\_use\_cases\_for\_final\_confidence.$$

Dabei gibt der Parameter delta_parameter_xx an, wie weit ein bestimmter Parkparameter aufgrund des noch nicht vorhandenen Fahrervertrauens in das Parkassistenzsystem verändert werden muss.

Diese Schrittweite S wird für jedes automatisch durchgeführte Parkmanöver berechnet, bis ein finaler Satz an Parkparametern erreicht ist, und zwar dadurch, dass die den jeweiligen Parkparametern zugeordneten Parameter delta_parameter_xx jeweils auf Null reduziert wurden.

Es versteht sich, dass progressive bzw. degressive Veränderungen der Parkparameter in Abhängigkeit von der Anzahl von automatisiert durchgeführten Parkvorgängen möglich sind.

b) Anpassung der Parkparameter an ein verringertes Vertrauen in das Parkassistenzsystem

Während der Durchführung eines automatisierten Parkvorgangs durch das Parkassistenzsystem werden vorzugsweise Fahrereingriffe ermittelt, basierend auf denen Parkparameter des Parkassistenzsystems hin zu einer höheren Sicherheit verändert werden. Diese Ermittlung der Fahrereingriffe kann insbesondere in Abhängigkeit von der gegenwärtigen Situation erfolgen. Die Parkassistenzfunktion schätzt vorzugsweise ab, was der Grund für den Fahrereingriff gewesen ist und adaptiert basierend darauf die relevanten Parkparameter.

Folgende Fahrereingriffe können beispielsweise (einzeln oder in Kombination) während des automatisiert durchgeführten Parkvorgangs ermittelt werden:

- schonendes Abbremsen durch den Fahrer, um die Geschwindigkeit anzupassen, wobei ein großer Abstand zu einem Umgebungsobjekt besteht;
- schonendes Abbremsen durch den Fahrer, um die Geschwindigkeit anzupassen, wobei ein geringer Abstand zu einem Umgebungsobjekt besteht;

- schonendes Abbremsen durch den Fahrer, um das Fahrzeug zu stoppen, wobei ein großer Abstand zu einem Umgebungsobjekt besteht;
- schonendes Abbremsen durch den Fahrer, um das Fahrzeug zu stoppen, wobei ein geringer Abstand zu einem Umgebungsobjekt besteht;
- Notbremsung des Fahrers, wobei ein großer Abstand zu einem Umgebungsobjekt besteht;
- Notbremsung des Fahrers, wobei ein geringer Abstand zu einem Umgebungsobjekt besteht;
- Fahrer berührt das Lenkrad;
- Fahrer berührt eine Benutzer-Schnittstelle, um die Parkassistenzfunktion zu beenden bzw. zu unterbrechen;
- Fahrer öffnet die Tür (von innen oder von außen bei einem fernbedienten Parkvorgang);
- Fahrer schaltet das Getriebe (Schaltgetriebe oder Automatik);
- Fahrer betätigt das Gaspedal, um die Parkfunktion zu übersteuern;
- Fahrer betätigt die Kupplung.

Die Anpassung der Parkparameter hin zu einem geringeren Vertrauen des Fahrers in das Parkassistenzsystem kann in gleicher Weise geschehen, wie das zuvor mit Hinblick auf die Anpassung der Parkparameter hin zu einem größeren Vertrauen des Fahrers in das Parkassistenzsystem beschrieben wurde.

Anpassung der Parkassistenzfunktion an fahrerspezifische, präferierte Einstellungen

a) Auswählbarkeit von Parken für Behinderte

Bei Aktivierung dieser Einstellung werden durch die Parkassistenzfunktion auch Parklücken angeboten, die für behinderte Menschen reserviert sind. Bevor dieser Teil der Parkassistenzfunktion genutzt werden kann muss der Fahrer einen Parameter definieren, der angibt, ob dieser für ein Parken auf Behindertenparkplätzen berechtigt ist oder nicht. Dieser Parameter ist dem jeweiligen Fahrer zugeordnet gespeichert. Wenn der Fahrer diesen Parameter vor der Nutzung der Parkassistenzfunktion nicht definiert, kann nach der erstmaligen Erkennung einer Parklücke für behinderte Menschen ein Benutzerhinweis dargestellt werden, um den Fahrer dazu aufzufordern, diesen Parameter zu definieren.
Zur Erkennung von Parklücken für behinderte Menschen kann beispielsweise eine Kamera verwendet werden, die entsprechende Hinweise auf der Straße oder an Straßenschildern erkennt. Vorzugsweise können diese durch die Kamera gewonnenen Daten durch Daten einer Karte eines Navigationssystems angereichert werden. Dadurch kann gegebenenfalls ein Start- bzw. Endpunkt einer Zone, die lediglich behinderten Personen vorbehalten ist, aufgrund der GPS-Koordinaten ermittelt werden. Die Parkassistenzfunktion weist vorzugsweise GPS-Koordinaten jeder erkannten Parklücke zu, beispielsweise x-/y-Koordinaten der jeweiligen Eckbereiche einer Parklücke, so dass das Parkassistenzsystem jeder erkannten Parklücke das Attribut "parken nur für behinderte Menschen" zuweist oder nicht.

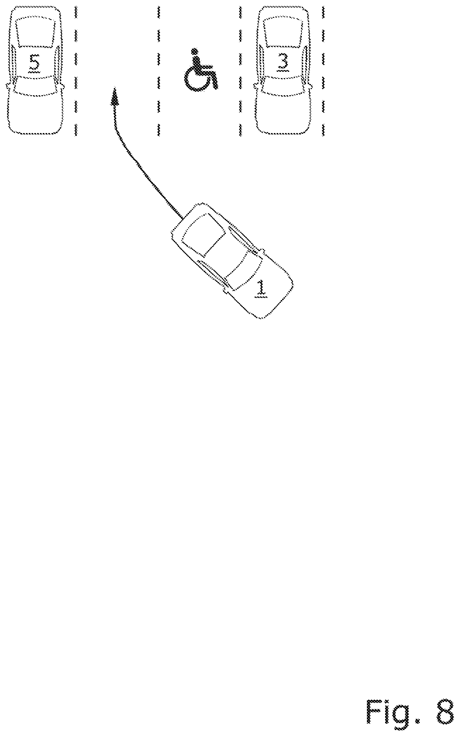

Figur 8 zeigt beispielsweise eine Darstellung einer Parklücke, die nur für behinderte Menschen vorgesehen ist.
Für den Fall, dass keine derartige Zoneninformation an der Straßenseite angebracht ist, kann die Kamera direkt im Bereich der Parklücke Verkehrszeichen oder Zeichen, die am Boden der Parklücke vorgesehen sind, erkennen. Nach dem Erkennen eines derartigen Verkehrszeichen oder Zeichens kann der jeweiligen Parklücke das Attribut "parken nur für behinderte Menschen" zugewiesen werden.
Bevor dem Fahrer eine Parklücke durch das Parkassistenzsystem angeboten wird, prüft die Parkassistenzfunktion folgendes:

a) weist die Parklücke das Attribut "parken nur für behinderte Menschen" auf? und

b) gibt der dem Fahrer zugeordnete Parameter an, dass dieser auf Parkflächen für behinderte Menschen parken darf?

Die Parklücke wird lediglich dann dem Fahrer angeboten, wenn entweder die vorgenannten Bedingungen a) und b) erfüllt sind oder a) nicht erfüllt ist.

b) Auswählbarkeit von Parken für Frauen

Das Parkassistenzsystem kann beispielsweise Parklücken, die lediglich für Frauen zum Parken vorgesehen sind, anbieten. Das Verfahren kann dabei analog zu dem unter Buchstabe a) (Parken für behinderte Menschen) vollzogen werden.

c) Bereitschaft für Parken zu bezahlen

Das Parkassistenzsystem kann dazu ausgebildet sein, zu erkennen, ob das Parken in einer bestimmten Parklücke kostenpflichtig ist oder nicht und kann abhängig davon, ob der Fahrer bereit ist, für Parkplätze zu zahlen oder nicht (beispielsweise durch einen abgespeicherten Parameter), diesem einen kostenpflichtigen Parkplatz anbieten oder nicht.

Abhängig von dem jeweiligen Land und Ort können zu bezahlende Parkplätze wie folgt identifiziert werden:

- Gefärbte Randsteine oder gefärbte Linien auf dem Boden (beispielsweise in Italien);
- Schilder im Bereich des Parkplatzes oder am Beginn einer Zone für bezahltes Parken (beispielsweise in Deutschland);
- Parkplätze mit Bodenschwellen zur Sicherung von zu bezahlenden Parkplätzen.

Das Verfahren gemäß dem zuvor beschriebenen Buchstabe a) (Parken für behinderte Menschen) kann verwendet werden, um dem Parkplatz das Attribut "bezahltes Parken" zuzuweisen.

Die Beurteilung "bezahltes Parken mit Bodenschwellen" kann durch eine Objekterkennung der Bodenschwellen im Bereich der Parklücke oder durch eine drahtlose Kommunikationsverbindung zwischen dem Auto und einer Bodenschwelle bzw. einem Bezahlsystem einer derartigen Bodenschwelle erfolgen.

Die Parkassistenzfunktion prüft vorzugsweise folgendes, bevor eine erkannte Parklücke dem Fahrer zum automatisierten Parken angeboten wird:

a) Weist eine erkannte Parklücke das Attribut "bezahltes Parken" auf?

b) Ist dem Fahrer ein Attribut "bereit für Parken zu zahlen" zugewiesen?

Die Parklücke wird lediglich dann dem Fahrer angeboten, wenn entweder die vorgenannten Bedingungen a) und b) erfüllt sind oder a) nicht erfüllt ist.

d) Auswählbarkeit für Anwohnerparken

Die Parkassistenzfunktion bietet dem Fahrer Parklücken an, wenn der Fahrer GPS Koordinaten für sein Anwohnerbereich angegeben hat. Die Parkassistenzfunktion kann dazu ausgebildet sein, von dem Fahrer eine Bestätigung einzuholen, wenn die Parkassistenzfunktion dazu genutzt wird, außerhalb des Anwohnerbereichs zu parken.

Im Übrigen kann das Verfahren gemäß dem zuvor beschriebenen Buchstaben a) (Parken für behinderte Menschen) in analoger Weise für die Funktionalität "Anwohnerparken" verwendet werden.

e) Aktivieren/Definieren von weiteren Parkeigenschaften

Folgende Parkeigenschaften können in dem Parkassistenzsystem aktiviert werden:

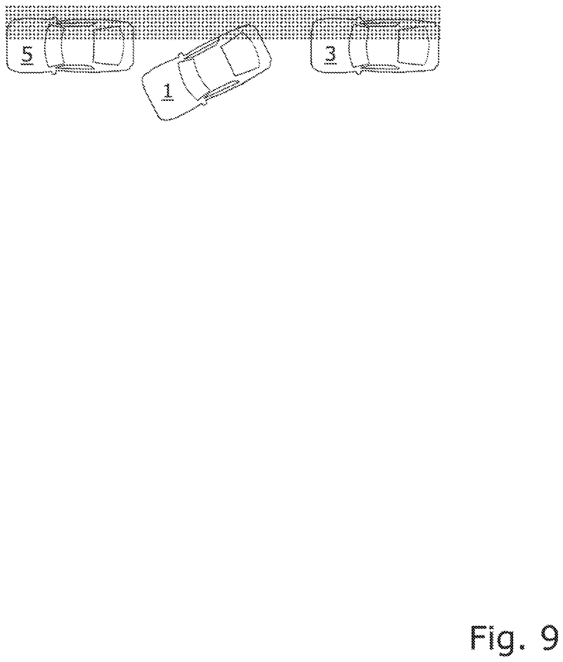

- Akzeptanz des Fahrers, Bordsteine zu überfahren (s. Fig. 9);
- Parken vor bzw. hinter einzelnen Fahrzeugen;
- Bereitschaft für ein direktes Vorwärtseinparken durch die Parkassistenzfunktion (s. Fig. 10);
- Bereitschaft zur Reaktion auf Änderungen in der Parksituation während des Parkvorgangs (dynamische Umplanung des Parkvorgangs) (s. Fig. 11).

Diese Parkeigenschaften können beispielsweise direkt in einem Konfigurationsmenü des Parkassistenzsystems durch den Fahrer eingestellt werden.

Alternativ oder zusätzlich können diese Parkeigenschaften beispielsweise durch eine an einer Benutzerschnittstelle ausgegebene Information eingestellt werden. Im Falle des Überfahrens von Bordsteinen kann beispielsweise dann, wenn die Parkassistenzfunktion erkennt, dass das Überfahren eines Randsteins vorteilhaft ist, weil andere Fahrzeuge in gleicher Weise parken, eine entsprechende Information an der Benutzerschnittstelle ausgegeben werden.

f) Einparkpräferenzen: vorwärts bzw. rückwärts (bei senkrechtem Parken)

Alternativ zu dem vorbeschriebenen Lernalgorithmus oder zusätzlich zu diesem kann ein Parameter, der die bevorzugte Parkrichtung bei senkrechtem Parken angibt, von dem Fahrer selbst eingestellt werden.

Diese Einparkpräferenz kann dann durch die Parkassistenzfunktion als bevorzugter Wert verwendet werden, aber das Parkassistenzsystem kann auch unterschiedlich dazu parken, wenn dies beispielsweise verpflichtend ist oder technische Vorteile bietet, beispielsweise dann, wenn eine senkrechte Parklücke in einem komplexen Parkszenario nicht in einer maximalen Anzahl von Parkzügen, beispielsweise durch Vorwärtseinparken, erreicht werden kann.

Die Erfindung wurde voranstehend an Ausführungsbeispielen beschrieben. Es versteht sich, dass zahlreiche Änderungen sowie Abwandlungen möglich sind, ohne dass dadurch der durch die Patentansprüche definierte Schutzbereich verlassen wird.

**Patentansprüche**

1. Verfahren zum Steuern eines Parkvorgangs eines Fahrzeugs (1), umfassend folgende Schritte:

   - Identifizieren eines Fahrers;
   - Erlernen von Fahrerparametern während eines vom Fahrer durchgeführten Parkvorgangs und Zuordnen der Fahrerparameter zum identifizierten Fahrer; wobei ein Parkvorgang ein Vorgang ist, bei dem ein Fahrzeug vorwärts, rückwärts, seitwärts oder schräg in eine Parklücke manövriert wird, wobei der Schritt des Erlernens von Fahrerparametern das Erfassen der Fahrzeuggeschwindigkeit, des Lenkwinkels, einer Lenkwinkelgeschwindigkeit, zumindest eines Abstandswerts eines Objekts relativ zum Fahrzeug (1) im Umgebungsbereich des Fahrzeugs (1) und Beschleunigungs- bzw. Verzögerungsparameter des Fahrzeugs (1) umfasst;
   - Bestimmen von Parkparametern basierend auf den erlernten Fahrerparametern dadurch, dass aus den Fahrerparametern Informationen extrahiert werden, die angeben, wie ein bestimmter Fahrer gewöhnlich einen Parkvorgang durchführt;
   - Sukzessive Anpassung der Parkparameter abhängig von der Anzahl der durch ein Parkassistenzsystem durchgeführten und dem identifizierten Fahrer zugeordneten Parkvorgänge, wobei progressive bzw. degressive Veränderungen der Parkparameter in Abhängigkeit von der Anzahl von automatisiert durchgeführten Parkvorgängen möglich sind,

     - Steuern durch das Parkassistenzsystem durchgeführten Parkvorgangs des Fahrzeugs (1) basierend auf den Parkparametern, wobei das Parkassistenzsystem basierend auf den extrahierten Informationen derart modifiziert wird, dass sich ein fahrerspezifisches Parkverhalten des Parkassistenzsystems einstellt.

2. Verfahren nach Anspruch 1, **dadurch gekennzeichnet, dass** der Schritt des Erlernens von Fahrerparametern das Erfassen der Fahrzeuggeschwindigkeit in Abhängigkeit des Lenkwinkels, das Erfassen der Fahrzeuggeschwindigkeit in Abhängigkeit der Lenkwinkelgeschwindigkeit, das Erfassen der Fahrzeuggeschwindigkeit in Abhängigkeit des Lenkwinkels und eines Abstandswerts eines Objekts relativ zum Fahrzeug (1) im Umgebungsbereich des Fahrzeugs (1) und/oder Beschleunigungs- bzw. Verzögerungsparameter des Fahrzeugs (1) in Abhängigkeit eines Abstandswerts eines Objekts relativ zum Fahrzeug (1) im Umgebungsbereich des Fahrzeugs (1) umfasst.

3. Verfahren nach Anspruch 1 oder 2, **dadurch gekennzeichnet, dass** der Schritt des Erlernens von Fahrerparametern das Sammeln einer Vielzahl von Messwerten an zeitlich aufeinanderfolgenden Messzeitpunkten und das Bilden eines Durchschnittswerts dieser Messwerte umfasst.

4. Verfahren nach einem der vorhergehenden Ansprüche, dass der Schritt des Erlernens von Fahrerparametern zusätzlich das Erfassen und Abspeichern von Informationen hinsichtlich der Parkrichtung, Informationen zur Ausrichtung des geparkten Fahrzeugs relativ zur Parklücke, Informationen hinsichtlich der benötigten Parkzüge und/oder des Parkvorgangtyps enthält.

5. Verfahren nach einem der vorhergehenden Ansprüche, **dadurch gekennzeichnet, dass** der Schritt des Erlernens von Fahrerparametern einen Prüfschritt enthält, ob während des vom Fahrer durchgeführten Parkvorgangs ermittelte Parkvorgangscharakteristika jeweils innerhalb eines definierten Bereichs liegen und die erlernten Fahrerparameter lediglich dann zur Bestimmung von Parkparametern herangezogen werden, wenn sich die Parkvorgangscharakteristika jeweils innerhalb des definierten Bereichs befinden.

6. Verfahren nach einem der vorhergehenden Ansprüche, dass der Schritt des Bestimmens von Parkparametern einen Schritt zur Mittelung mehrerer Fahrerparameter enthält, die durch eine Mindestanzahl von vom identifizierten Fahrer durchgeführten Parkvorgängen ermittelt wurden.

7. Verfahren nach einem der vorhergehenden Ansprüche, **dadurch gekennzeichnet, dass** der Schritt des Erlernens von Fahrerparametern die Bestimmung zumindest eines Toleranzparameters umfasst, der angibt, wie weit die Parkposition, an die das Fahrzeug (1) mittels des vom Fahrer durchgeführten Parkvorgangs bewegt wurde, von einer vom Parkassistenzsystem bestimmten Soll-Parkposition abweicht.

8. Verfahren nach Anspruch 7, **dadurch gekennzeichnet, dass** die Bestimmung zumindest eines Toleranzparameters eine Abweichung der Position des geparkten Fahrzeugs (1) von der Sollposition in einer ersten und zweiten Raumrichtung sowie eine Abweichung eines Ausrichtungswinkels des Fahrzeugs (1) von einem Soll-Ausrichtungswinkel umfasst.

9. Verfahren nach Anspruch 7 oder 8, **dadurch gekennzeichnet, dass** die Bestimmung zumindest eines Toleranzparameters die Bestimmung der Anzahl der Parkzüge zum Erreichen der Parkposition umfasst.

10. Verfahren nach einem der Ansprüche 7 bis 9, **dadurch gekennzeichnet, dass** zur Bestimmung zumindest eines Toleranzparameters zumindest eine erste und eine zweite Genauigkeitszone ermittelt wird und ermittelt wird, wie viele Parkzüge der Fahrer des Fahrzeugs (1) benötigt hat, um in die erste Genauigkeitszone bzw. von der ersten Genauigkeitszone in die zweite, höhere Genauigkeitszone zu gelangen und dass diese Anzahl an Parkzügen als fahrerspezifische Parkzuginformation abgespeichert wird.

11. Verfahren nach Anspruch 10, **dadurch gekennzeichnet, dass** die Anzahl der nötigen Parkzüge, um in die erste Genauigkeitszone bzw. von der ersten Genauigkeitszone in die zweite, höhere Genauigkeitszone zu gelangen, getrennt für Fahrzeugspositionswerte in zumindest zwei Raumrichtungen und den Ausrichtungswinkel des Fahrzeugs ermittelt wird.

12. Verfahren nach Anspruch 10 oder 11, **dadurch gekennzeichnet, dass** beim Schritt des Steuerns eines Parkvorgangs durch das Parkassistenzsystem nach dem Erreichen der ersten Genauigkeitszone ermittelt wird, wieviele Parkzüge durch das Parkassistenzsystem benötigt würden, um die zweite, höhere Genauigkeitszone zu erreichen und dass durch einen Vergleich mit der fahrerspezifischen Parkzuginformation entschieden wird, ob der durch das Parkassistenzsystem gesteuerte Parkprozess zum Erreichen einer höheren Parkgenauigkeit fortgesetzt wird.

13. Verfahren nach einem der vorhergehenden Ansprüche, **dadurch gekennzeichnet, dass** basierend auf den ermittelten Fahrerparametern die Planung der Parktrajektorie und/oder der Bewegungsablauf des Fahrzeugs (1) auf dieser Parktrajektorie beeinflusst wird.

14. Verfahren nach einem der vorhergehenden Ansprüche, **dadurch gekennzeichnet, dass** während eines vom Parkassistenzsystem durchgeführten Parkvorgangs Interaktionen des Fahrers mit Fahrzeugsteuerungsmitteln und/oder Informationen über den Fahrer selbst erfasst werden und basierend darauf die Parkparameter angepasst werden.

15. Verfahren nach einem der vorhergehenden Ansprüche, **dadurch gekennzeichnet, dass** der Sicherheitsabstand zu einem Umgebungsobjekt reduziert und/oder die Geschwindigkeit des Fahrzeugs beim Parkvorgang erhöht wird.

16. Verfahren nach einem der vorhergehenden Ansprüche, **dadurch gekennzeichnet, dass** bei dem Bestimmen von Parkparametern zusätzlich Fahrerpräferenzen berücksichtigt werden.

17. Verfahren nach Anspruch 16, dass die Fahrerpräferenzen in einem Initialisierungsprozess und/oder beim Eintreten einer Parksituation, die Informationen über eine Fahrerpräferenz erforderlich macht, abgefragt werden.

18. Verfahren nach Anspruch 16 oder 17, dass die Fahrerpräferenzen Informationen hinsichtlich der Erlaubnis zum Parken auf Parkflächen für Behinderte, hinsichtlich des Parkens auf Frauen- oder Mutter-Kind-Parkplätzen, hinsichtlich der Bereitschaft zu bezahltem Parken, der Erlaubnis zum Parken auf Parkflächen für Anwohner in einem bestimmten Bereich, hinsichtlich der Akzeptanz des Überfahrens von Bordsteinen, hinsichtlich der Bereitschaft zu direktem Vorwärtseinparken, hinsichtlich der Bereitschaft zur Reaktion auf Änderungen der Parksituation während des Parkvorgangs und/oder eine Vorwärts- bzw. Rückwärts-Einparkpräferenz enthalten.

19. Fahrzeug umfassend ein Parkassistenzsystem zum Steuern eines Parkvorgangs des Fahrzeugs (1), umfassend:

- Identifikationsmittel zum Identifizieren eines Fahrers;
- Sensormittel zum Erfassen von Fahrerparametern während eines vom Fahrer durchgeführten Parkvorgangs; wobei ein Parkvorgang ein Vorgang ist, bei dem ein Fahrzeug vorwärts, rückwärts, seitwärts oder schräg in eine Parklücke manövriert wird;
- Zumindest eine Speichereinheit zum Speichern der Fahrerparameter, wobei die Fahrerparameter dem identifizierten Fahrer zugeordnet gespeichert werden;
- Zumindest eine Rechnereinheit, die zum Bestimmen von Parkparametern basierend auf den erlernten Fahrerparametern ausgebildet ist, aus den Fahrerparametern Informationen zu extrahieren, die angeben, wie ein bestimmter Fahrer gewöhnlich einen Parkvorgang durchführt; wobei der Schritt des Erlernens von Fahrerparametern das Erfassen der Fahrzeuggeschwindigkeit, des Lenkwinkels, einer Lenkwinkelgeschwindigkeit, zumindest eines Abstandswerts eines Objekts relativ zum Fahrzeug (1) im Umgebungsbereich des Fahrzeugs (1) und Beschleunigungs- bzw. Verzögerungsparameter des Fahrzeugs (1) umfasst;

- Sukzessive Anpassung der Parkparameter abhängig von der Anzahl der durch ein Parkassistenzsystem durchgeführten und dem identifizierten Fahrer zugeordneten Parkvorgänge, wobei progressive bzw. degressive Veränderungen der Parkparameter in Abhängigkeit von der Anzahl von automatisiert durchgeführten Parkvorgängen möglich sind, und

- ein Parkassistenzsystem, das zum automatisierten Steuern des Parkvorgangs des Fahrzeugs (1) basierend auf den Parkparametern ausgebildet ist, wobei das Parkassistenzsystem basierend auf den extrahierten Informationen derart modifiziert ist, dass sich ein fahrerspezifisches Parkverhalten des Parkassistenzsystems einstellt.

## Claims

1. Method for controlling a parking process of a vehicle (1), comprising the following steps of:

   - identifying a driver;
   - learning driver parameters during a parking process carried out by the driver and assigning the driver parameters to the identified driver; wherein a parking process is a process in which a vehicle is manoeuvred forwards, backwards, sidewards or obliquely into a parking space, wherein the step of learning driver parameters comprises capturing the vehicle speed, the steering angle, a steering angle speed, at least one distance value for an object relative to the vehicle (1) in the surrounding area of the vehicle (1) and acceleration and/or deceleration parameters of the vehicle (1);
   - determining parking parameters on the basis of the learnt driver parameters by extracting information from the driver parameters which indicates how a particular driver usually carries out a parking process;
   - gradually adapting the parking parameters on the basis of the number of parking processes carried out by a parking assistance system and assigned to the identified driver, wherein progressive and/or degressive changes in the parking parameters are possible on the basis of the number of parking processes carried out in an automated manner,
   - controlling a parking process of the vehicle (1), which is carried out by the parking assistance system, on the basis of the parking parameters, wherein the parking assistance system is modified on the basis of the extracted information in such a manner that a driver-specific parking behaviour of the parking assistance system is established.

2. Method according to Claim 1, **characterized in that** the step of learning driver parameters comprises capturing the vehicle speed on the basis of the steering angle, capturing the vehicle speed on the basis of the steering angle speed, capturing the vehicle speed on the basis of the steering angle and a distance value for an object relative to the vehicle (1) in the surrounding area of the vehicle (1), and/or acceleration and/or deceleration parameters of the vehicle (1) on the basis of a distance value for an object relative to the vehicle (1) in the surrounding area of the vehicle (1).

3. Method according to Claim 1 or 2, **characterized in that** the step of learning driver parameters comprises collecting a multiplicity of measured values at temporally successive measurement times and forming an average value of these measured values.

4. Method according to one of the preceding claims, **characterized in that** the step of learning driver parameters additionally involves capturing and storing information relating to the parking direction, information relating to the orientation of the parked vehicle relative to the parking space, information relating to the required parking movements and/or the type of parking process.

5. Method according to one of the preceding claims, **characterized in that** the step of learning driver parameters includes a checking step in order to determine whether parking process characteristics determined during the parking process carried out by the driver are each within a defined range, and the learnt driver parameters are used to determine parking parameters only when the parking process characteristics are each within the defined range.

6. Method according to one of the preceding claims, **characterized in that** the step of determining parking parameters includes a step for averaging a plurality of driver parameters determined by a minimum number of parking processes carried out by the identified driver.

7. Method according to one of the preceding claims, **characterized in that** the step of learning driver parameters comprises determining at least one tolerance parameter that indicates the extent to which the parked position, to which the vehicle (1) has been moved by means of the parking process carried out by the driver, differs from a target parked position determined by the parking assistance system.

8. Method according to Claim 7, **characterized in that** the determination of at least one tolerance parameter comprises a deviation of the position of the parked vehicle (1) from the target position in a first and a second spatial direction and a deviation of an orientation angle of the vehicle (1) from a target orientation angle.

9. Method according to Claim 7 or 8, **characterized in that** the determination of at least one tolerance parameter comprises determining the number of parking movements in order to reach the parked position.

10. Method according to one of Claims 7 to 9, **characterized in that**, in order to determine at least one tolerance parameter, at least a first and a second accuracy zone are determined, and it is determined how many parking movements the driver of the vehicle (1) has needed to reach the first accuracy zone or to pass from the first accuracy zone to the second, higher accuracy zone, and **in that** this number of parking movements is stored as driver-specific parking movement information.

11. Method according to Claim 10, **characterized in that** the number of parking movements needed to reach the first accuracy zone or to move from the first accuracy zone to the second, higher accuracy zone is determined separately for vehicle position values in at least two spatial directions and the orientation angle of the vehicle.

12. Method according to Claim 10 or 11, **characterized in that**, in the step of controlling a parking process by way of the parking assistance system, after the first accuracy zone has been reached, it is determined how many parking movements would be needed by the parking assistance system to reach the second, higher accuracy zone, and **in that** a decision is made, by means of a comparison with the driver-specific parking movement information, as to whether the parking process controlled by the parking assistance system is continued in order to achieve a higher degree of parking accuracy.

13. Method according to one of the preceding claims, **characterized in that** the planning of the parking trajectory and/or the movement sequence of the vehicle (1) on this parking trajectory is/are influenced on the basis of the determined driver parameters.

14. Method according to one of the preceding claims, **characterized in that**, during a parking process carried out by the parking assistance system, interactions of the driver with vehicle control means and/or information relating to the driver himself is/are captured and the parking parameters are adapted on the basis thereof.

15. Method according to one of the preceding claims, **characterized in that** the safety distance to an environment object is reduced and/or the speed of the vehicle during the parking process is increased.

16. Method according to one of the preceding claims, **characterized in that** driver preferences are additionally taken into account when determining parking parameters.

17. Method according to Claim 16, **characterized in that** the driver preferences are retrieved in an initialization process and/or when a parking situation necessitating information relating to a driver preference occurs.

18. Method according to Claim 16 or 17, **characterized in that** the driver preferences include information relating to the permission to park in parking areas for disabled people, relating to parking in women's or mother and baby parking areas, relating to the willingness to pay for parking, the permission to park in parking areas for residents in a particular region, relating to the acceptance of driving over kerbs, relating to the willingness to drive forward directly into a parking space, relating to the willingness to react to changes in the parking situation during the parking process and/or a preference to drive forward or reverse into a parking space.

19. Vehicle comprising a parking assistance system for controlling a parking process of the vehicle (1), comprising:

- identification means for identifying a driver;
- sensor means for capturing driver parameters during a parking process carried out by the driver; wherein a parking process is a process in which a vehicle is manoeuvred forwards, backwards, sidewards or obliquely into a parking space;
- at least one storage unit for storing the driver parameters, wherein the driver parameters are stored in a manner assigned to the identified driver;
- at least one computer unit which is designed to determine parking parameters on the basis of the learnt driver parameters, to extract information from the driver parameters which indicates how a particular driver usually carries out a parking process; wherein the step of learning driver parameters comprises capturing the vehicle speed, the steering angle, a steering angle speed, at least one distance value for an object relative to the vehicle (1) in the surrounding area of the vehicle (1) and acceleration and/or deceleration parameters of the vehicle (1);
- gradual adaptation of the parking parameters on the basis of the number of parking processes carried out by a parking assistance system and assigned to the identified driver, wherein progressive and/or degressive changes in the parking parameters are possible on the basis of the number of parking processes carried out in an automated manner, and
- a parking assistance system which is designed to control the parking process of the vehicle (1) in an automated manner on the basis of the parking parameters, wherein the parking assistance system is modified on the basis of the extracted information in such a manner that a driver-specific parking behaviour of the parking assistance system is established.

**Revendications**

1. Procédé pour la commande d'une manoeuvre de stationnement d'un véhicule (1), comprenant les étapes suivantes :

   - l'identification d'un conducteur ;
   - l'apprentissage de paramètres de conducteur durant une manoeuvre de stationnement effectuée par le conducteur et l'association des paramètres de conducteur au conducteur identifié ; une manoeuvre de stationnement étant une manoeuvre lors de laquelle un véhicule est manoeuvré vers l'avant, vers l'arrière, latéralement ou en biais dans un emplacement de stationnement, l'étape d'apprentissage de paramètres de conducteur comprenant la détection de la vitesse du véhicule, de l'angle de braquage, d'une vitesse angulaire de braquage, d'au moins une valeur de distance d'un objet par rapport au véhicule (1) dans la zone environnante du véhicule (1) et de paramètres d'accélération ou de décélération du véhicule (1) ;
   - la détermination de paramètres de stationnement sur la base des paramètres de conducteur appris, en extrayant à partir des paramètres de conducteur des informations qui indiquent comment un conducteur donné effectue habituellement une manoeuvre de stationnement ;
   - l'adaptation successive des paramètres de stationnement en fonction du nombre des manoeuvres de stationnement effectuées par un système d'assistance au stationnement et associées au conducteur identifié, des modifications progressives ou dégressives des paramètres de stationnement étant possibles en fonction du nombre de manoeuvres de stationnement effectuées de manière automatisée,
   - la commande de la manoeuvre de stationnement du véhicule (1) effectuée par le système d'assistance au stationnement sur la base des paramètres de stationnement, le système d'assistance au stationnement étant modifié sur la base des informations extraites de telle manière qu'un comportement de stationnement spécifique au conducteur du système d'assistance au stationnement s'établisse.

2. Procédé selon la revendication 1, **caractérisé en ce que** l'étape d'apprentissage de paramètres de conducteur comprend la détection de la vitesse du véhicule en fonction de l'angle de braquage, la détection de la vitesse du véhicule en fonction de la vitesse d'angle de braquage, la détection de la vitesse du véhicule en fonction de l'angle de braquage et d'une valeur de distance d'un objet par rapport au véhicule (1) dans la zone environnante du véhicule (1) et/ou de paramètres d'accélération ou de décélération du véhicule (1) en fonction d'une valeur de distance d'un objet par rapport au véhicule (1) dans la zone environnante du véhicule (1).

3. Procédé selon la revendication 1 ou 2, **caractérisé en ce que** l'étape d'apprentissage de paramètres de conducteur comprend la collecte d'une pluralité de valeurs de mesure à des instants de mesure consécutifs dans le temps et le calcul d'une valeur moyenne de ces valeurs de mesure.

4. Procédé selon l'une des revendications précédentes, dans lequel l'étape d'apprentissage de paramètres de conducteur comprend en outre la détection et la mémorisation d'informations concernant la direction de stationnement, d'informations concernant l'orientation du véhicule stationné par rapport à l'emplacement de stationnement, d'informations concernant les courses de stationnement exigées et/ou le type de manoeuvre de stationnement.

5. Procédé selon l'une des revendications précédentes, **caractérisé en ce que** l'étape d'apprentissage de paramètres de conducteur comprend une étape consistant à vérifier si des caractéristiques de stationnement déterminées durant la manoeuvre de stationnement effectuée par le conducteur se situent respectivement à l'intérieur d'une plage définie, et **en ce que** les paramètres de conducteur appris sont utilisés pour déterminer des paramètres de stationnement uniquement si les caractéristiques de stationnement se situent respectivement à l'intérieur de la plage définie.

6. Procédé selon l'une des revendications précédentes, dans lequel l'étape de détermination de paramètres de stationnement comprend une étape de calcul de la moyenne de plusieurs paramètres de conducteur qui ont été déterminés par un nombre minimum de manoeuvres de stationnement effectuées par le conducteur identifié.

7. Procédé selon l'une des revendications précédentes, **caractérisé en ce que** l'étape d'apprentissage de paramètres de conducteur comprend la détermination d'au moins un paramètre de tolérance qui indique dans quelle mesure la position de stationnement vers laquelle le véhicule (1) a été déplacé au moyen de la manoeuvre de stationnement effectuée par le conducteur s'écarte d'une position de stationnement cible déterminée par le système d'assistance au stationnement.

8. Procédé selon la revendication 7, **caractérisé en ce que** la détermination d'au moins un paramètre de tolérance comprend un écart de la position du véhicule stationné (1) par rapport à la position cible dans des première et seconde directions spatiales, ainsi qu'un écart d'un angle d'orientation du véhicule (1) par rapport à un angle d'orientation cible.

9. Procédé selon la revendication 7 ou 8, **caractérisé en ce que** la détermination d'au moins un paramètre de tolérance comprend la détermination du nombre de courses de stationnement permettant d'atteindre la position de stationnement.

10. Procédé selon l'une des revendications 7 à 9, **caractérisé en ce que**, pour la détermination d'au moins un paramètre de tolérance, au moins une première et une seconde zone de précision est déterminée, et **en ce que** le nombre de courses de stationnement nécessaires au conducteur du véhicule (1) pour atteindre la première zone de précision ou pour passer de la première zone de précision à la seconde zone de précision plus élevée est déterminé, et **en ce que** ce nombre de courses de stationnement est mémorisé en tant qu'information de course de stationnement spécifique au conducteur.

11. Procédé selon la revendication 10, **caractérisé en ce que** le nombre de courses de stationnement nécessaires pour atteindre la première zone de précision ou pour passer de la première zone de précision à la seconde zone de précision plus élevée est déterminé séparément pour des valeurs de position du véhicule dans au moins deux directions spatiales et pour l'angle d'orientation du véhicule.

12. Procédé selon la revendication 10 ou 11, **caractérisé en ce que** lors de l'étape de commande d'une manoeuvre de stationnement par le système d'assistance au stationnement après que la première zone de précision a été atteinte, il est déterminé combien de courses de stationnement seraient exigées par le système d'assistance au stationnement pour atteindre la seconde zone de précision plus élevée, et **en ce que**, au moyen d'une comparaison avec l'information de course de stationnement spécifique au conducteur, il est décidé si la manoeuvre de stationnement commandée par le système d'assistance au stationnement doit être poursuivie pour atteindre une précision de stationnement plus élevée.

13. Procédé selon l'une des revendications précédentes, **caractérisé en ce que** la planification de la trajectoire de stationnement et/ou le déplacement du véhicule (1) sur cette trajectoire de stationnement sont influencés sur la base des paramètres de conducteur déterminés.

14. Procédé selon l'une des revendications précédentes, **caractérisé en ce que** des interactions du conducteur avec des moyens de commande du véhicule et/ou des informations concernant le conducteur lui-même sont détectées durant une manoeuvre de stationnement, et **en ce que** les paramètres de stationnement sont adaptés sur cette base.

15. Procédé selon l'une des revendications précédentes, **caractérisé en ce que** la distance de sécurité par rapport à un objet environnant est réduite et/ou la vitesse du véhicule est augmentée lors de la manoeuvre de stationnement.

**16.** Procédé selon l'une des revendications précédentes, **caractérisé en ce que** des préférences du conducteur sont en outre prises en compte lors de la détermination de paramètres de stationnement.

**17.** Procédé selon la revendication 16, **caractérisé en ce que** les préférences du conducteur sont demandées lors d'un processus d'initialisation et/ou lors de l'apparition d'une situation de stationnement rendant nécessaires des informations concernant une préférence du conducteur.

**18.** Procédé selon la revendication 16 ou 17, dans lequel les préférences du conducteur comprennent des informations concernant l'autorisation de stationner sur des zones de stationnement pour personnes handicapées, concernant le stationnement sur des places de stationnement réservées aux femmes ou aux mères et aux enfants, concernant la volonté de stationner en payant, concernant l'autorisation de stationner sur des zones de stationnement réservées aux résidents dans une zone déterminée, concernant l'acceptation de franchir des trottoirs, concernant la volonté de stationner directement en marche avant, concernant la volonté de réagir à des changements de situation de stationnement durant la manoeuvre de stationnement et/ou une préférence de stationnement en marche avant ou arrière.

**19.** Véhicule comprenant un système d'assistance au stationnement destiné à commander une manoeuvre de stationnement du véhicule (1), comprenant :

- des moyens d'identification permettant l'identification d'un conducteur ;
- des moyens capteurs permettant la détection de paramètres de conducteur durant une manoeuvre de stationnement effectuée par le conducteur ; une manoeuvre de stationnement étant une manoeuvre lors de laquelle un véhicule est manoeuvré vers l'avant, vers l'arrière, latéralement ou en biais dans un emplacement de stationnement ;
- au moins une unité de mémoire pour le stockage de paramètres de conducteur, les paramètres de conducteur étant stockés en association avec le conducteur identifié ;
- au moins une unité de calcul qui est conçue pour déterminer des paramètres de stationnement sur la base des paramètres de conducteur appris, afin d'extraire à partir des paramètres de conducteur des informations qui indiquent comment un conducteur donné effectue habituellement une manoeuvre de stationnement ;
l'étape d'apprentissage de paramètres de conducteur comprenant la détection de la vitesse du véhicule, de l'angle de braquage, d'une vitesse angulaire de braquage, d'au moins une valeur de distance d'un objet par rapport au véhicule (1) dans la zone environnante du véhicule (1) et de paramètres d'accélération ou de décélération du véhicule (1) ;
- l'adaptation successive des paramètres de stationnement en fonction du nombre de manoeuvres de stationnement effectuées par un système d'assistance au stationnement et associées au conducteur identifié, des modifications progressives ou dégressives des paramètres de stationnement étant possibles en fonction du nombre de manoeuvres de stationnement effectuées de manière automatisée,
- un système d'assistance au stationnement qui est conçu pour commander de manière automatisée la manoeuvre de stationnement du véhicule (1) sur la base des paramètres de stationnement, le système d'assistance au stationnement étant modifié sur la base des informations extraites de telle manière qu'un comportement de stationnement spécifique au conducteur du système d'assistance au stationnement s'établisse.

Fig. 1

Parameter

| Parameter | | | | | | | | | | | | | | | | | | |
|---|---|---|---|---|---|---|---|---|---|---|---|---|---|---|---|---|---|---|
| 2.1 Manövriergeschwindigkeit in Abhängigkeit vom Lenkwinkel | Lenkwinkel [°] | -40 | -35 | -30 | -25 | -20 | -15 | -10 | -5 | 0 | 5 | 10 | 15 | 20 | 25 | 30 | 35 | 40 |
| | Manövriergeschwindigkeit [km/h] | | | | | 1 | 2 | 2 | 3 | 8 | 3 | 2 | | | | | | |
| 2.2 Manövriergeschwindigkeit in Abhängigkeit von der Lenkwinkelgeschwindigkeit | Lenkwinkelgeschwindigkeit (°/s) | -180 | -160 | -140 | -120 | -100 | -80 | -60 | -40 | -20 | 0 | 20 | 40 | 60 | 80 | 100 | 120 | 140 |
| | | | | | | 1 | 1 | 2 | 2 | 3 | 8 | 8 | 8 | 2 | 1 | | | |
| 2.3 Manövriergeschwindigkeit in Abhängigkeit von der Lenkwinkel und Objektabstand | Lenkwinkel [°] | -40 | -35 | -30 | -25 | -20 | -15 | -10 | -5 | 0 | 5 | 10 | 15 | 20 | 25 | 30 | 35 | 40 |
| | Abstand zu Umgebungsobjekt [m] = 1,5 | | | | | | | | | | | | | | | | | |
| | 1,25 | | | | | 2 | | | | | | | | | 1 | | | |
| | 1 | | | | | | 1 | 1 | | | | | 1,5 | | | | | |
| | 0,75 | | | | | | | | 0,5 | 0,5 | | 1 | | | | | | |
| | 0,5 | | | | | | | | | | 0,5 | | | | | | | |
| | 0,25 | [Zellwert: Manövriergeschwindigkeit in km/h] | | | | | | | | | | | | | | | | |
| | 0 | | | | | | | | | | | | | | | | | |
| 2.4 Beschleunigungs-/Verzögerungsgradient in Abhängigkeit vom Objektabstand | Abstand zu Umgebungsobjekt [m] | 3 | 2,5 | 2 | 1,5 | 1,25 | 1 | 0,9 | 0,8 | 0,7 | 0,6 | 0,5 | 0,4 | 0,3 | 0,2 | 0,1 | 0 | |
| | Verzögerungsgradient [m/s²] | 0,2 | 0,5 | 1 | 2 | 2 | 2 | 10 | 10 | 10 | | | | | 20 | | | |
| | Beschleunigungsgradient [m/s²] | 3 | 2 | 1 | 1 | 1 | 0,2 | 0,2 | 0 | | | | | | | | | |

| | | |
|---|---|---|
| 2.7 Parkpräferenz des Fahrers für Senkrechtparken: Einfahrt in Vorwärtsrichtung, Einfahrt in Rückwärtsrichtung | Einfahrt in Vorwärtsrichtung | 0 |
| | Einfahrt in Rückwärtsrichtung | 1 |
| 2.8 Parkpräferenz des Fahrers für Senkrechtparken: Blockieren der Beifahrertüre durch das beachbarte Fahrzeug oder Anordnung des Fahrzeugs in der Mitte der Parklücke (wenn ein Senkrechtparkplatz erkannt wurde und nur der Fahrersitz belegt ist) (boolscher Wert) | Fahrzeug mittig angeordnet | 1 |
| | Fahrzeug in Richtung Beifahrerseite versetzt | 0 |
| | Fahrzeug in Richtung Fahrerseite versetzt | 0 |
| 2.9 Parkpräferenz des Fahrers für Parallelparken: Zentrieren des Fahrzeugs in der Parklücke, größerer Abstand hinten oder größerer Abstand vorne (Zahlenwert {0, 1, 2}) | Fahrzeug mittig angeordnet | 0 |
| | mehr Platz hinten | 0 |
| | mehr Platz vorne | 1 |
| | Abstand vorne, Manövrierraum | 0,6 |
| 2.10 Fahrerakzeptanz Zielpositionsgenauigkeit vs. benötigte Parkzüge zum Erreiche der Zielposition | Parkzüge des Fahrers | 5 |
| | Berechnete min. Anz. Parkzüge zum Erreichen Zielposition | 7 |
| | Abweichung in x-Richtung [m] | 0,3 |
| | Abweichung in y-Richtung [m] | 0,4 |
| | Abweichung des Ausrichtwinkels [°] | 2,5 |
| Parkmanövertyp (Parallelparken "0", Senkrechtparken "1", Diagonalparken "2"...) | | 0 |

Fig. 2

23

EP 3 700 805 B1

| Parameter | | A | B | Values (example) | | | | | | | | | | | | | | | |
|---|---|---|---|---|---|---|---|---|---|---|---|---|---|---|---|---|---|---|---|
| 2.1 Manövriergeschwindigkeit in Abhängigkeit vom Lenkwinkel | Lenkwinkel [°] | 20 | 0 | -40 | -35 | -30 | -25 | -20 | -15 | -10 | -5 | 0 | 5 | 10 | 15 | 20 | 25 | 30 | 35 | 40 |
| | Manövriergeschwindigkeit [km/h] | | | | | | | 1 | 2 | 2 | 3 | 8 | 3 | 2 | | | | | |
| 2.2 Manövriergeschwindigkeit in Abhängigkeit von der Lenkwinkelgeschwindigkeit | Lenkwinkelgeschwindigkeit (°/s) | 20 | 0 | -180 | -160 | -140 | -120 | -100 | -80 | -60 | -40 | -20 | 0 | 20 | 40 | 60 | 80 | 100 | 120 | 140 |
| | Manövriergeschwindigkeit [km/h] | | | | | | | 1 | 1 | 2 | 2 | 3 | 8 | 8 | 8 | 2 | 1 | | |
| 2.3 Manövriergeschwindigkeit in Abhängigkeit von der Lenkwinkel und Objektabstand | Lenkwinkel [°] | 50 | | -40 | -35 | -30 | -25 | -20 | -15 | -10 | -5 | 0 | 5 | 10 | 15 | 20 | 25 | 30 | 35 | 40 |
| | Abstand zu Umgebungsobjekt [m] — 1,5 | | | | | | | | | | | | | | | | | | |
| | 1,25 | | | | | | | 2 | | | | | | | | 1 | | | |
| | 1 | | | | | | | | 1 | 1 | | | | 1,5 | | | | | |
| | 0,75 | | | | | | | | | | 0,5 | 0,5 | | 1 | | | | | |
| | 0,5 | | | | | | | | | | | 0,5 | | | | | | | |
| | 0,25 | | | [Zellwert: Manövriergeschwindigkeit in km/h] | | | | | | | | | | | | | | | |
| | 0 | | 0 | | | | | | | | | | | | | | | | |
| 2.4 Beschleunigungs/Verzögerungsgradient in Abhängigkeit vom Objektabstand | Abstand zu Umgebungsobjekt [m] | 10 | 1 | 3 | 2,5 | 2 | 1,5 | 1,25 | 1 | 0,9 | 0,8 | 0,7 | 0,6 | 0,5 | 0,4 | 0,3 | 0,2 | 0,1 | 0 | |
| | Verzögerungsgradient [m/s²] | | | 0,2 | 0,5 | 1 | 2 | 2 | 2 | 10 | 10 | 10 | | | | | 20 | | | |
| | Beschleunigungsgradient [m/s²] | | | 3 | 2 | 1 | 1 | 0,2 | 0,2 | 0 | | | | | | | | | | |
| 2.7 Parkpräferenz des Fahrers für Senkrechtparken: Einfahrt in Vorwärtsrichtung, Einfahrt in Rückwärtsrichtung | Einfahrt in Vorwärtsrichtung | 10 | 1 | 1 | | | | | | | | | | | | | | | | |
| | Einfahrt in Rückwärtsrichtung | | | 9 | | | | | | | | | | | | | | | | |
| 2.8 Parkpräferenz des Fahrers für Senkrechtparken: Blockieren der Beifahrertüre durch das beachbarte Fahrzeug oder Anordnung des Fahrzeugs in der Mitte der Parklücke (wenn ein Senkrechtparkplatz erkannt wurde und nur der Fahrersitz belegt ist) (boolscher Wert) | Fahrzeug mittig angeordnet | 10 | 0 | 4 | | | | | | | | | | | | | | | | |
| | Fahrzeug in Richtung Beifahrerseite versetzt | | | 3 | | | | | | | | | | | | | | | | |
| | Fahrzeug in Richtung Fahrerseite versetzt | | | 3 | | | | | | | | | | | | | | | | |
| 2.9 Parkpräferenz des Fahrers für Parallelparken: Zentrieren des Fahrzeugs in der Parklücke, größerer Abstand hinten oder größerer Abstand vorne (Zahlenwert {0, 1, 2}) | Fahrzeug mittig angeordnet | 10 | 1 | 1 | | | | | | | | | | | | | | | | |
| | mehr Platz hinten | | | 0 | | | | | | | | | | | | | | | | |
| | mehr Platz vorne | | | 9 | | | | | | | | | | | | | | | | |
| | Abstand vorne, Manövrierraum | | | 0,65 | | | | | | | | | | | | | | | | |

EP 3 700 805 B1

Fig. 3

Fig. 4

Fig. 5

| | Zusätzliche Parkzüge zum Erreichen der nächsten Zone | | | |
|---|---|---|---|---|
| | Außerhalb des Zielbereichs -> niedrige Genauigkeit | niedrige Genauigkeit -> mittlere Genauigkeit | mittlere Genauigkeit -> hohe Genauigkeit | Manövriertyp |
| Zone x | 3,0 | 3,0 | 1,0 | |
| Zone y | 3,0 | 3,0 | 3,0 | |
| Ausrichtwinkel | 0,0 | 1,0 | 0,0 | parallel |
| Zone x | 3,7 | 3,7 | 1,2 | |
| Zone y | 3,7 | 3,7 | 3,7 | Senkrecht vorwärts |
| Ausrichtwinkel | 0,0 | 1,2 | 1,1 | |
| Zone x | 2,6 | 2,6 | 0,9 | |
| Zone y | 2,6 | 2,6 | 2,6 | Senkrecht rückwärts |
| Ausrichtwinkel | 0,0 | 0,9 | 0,8 | |
| Zone x | 1,5 | 1,5 | 0,5 | |
| Zone y | 1,5 | 1,5 | 1,5 | Schräg vorwärts |
| Ausrichtwinkel | 0,0 | 0,5 | 0,0 | |

Fig. 6

| | Zusätzliche Parkzüge zum Erreichen der nächsten Zone | | | |
|---|---|---|---|---|
| | Außerhalb des Zielbereichs -><br>niedrige Genauigkeit | niedrige Genauigkeit -><br>mittlere Genauigkeit | mittlere Genauigkeit -><br>hohe Genauigkeit | Manövriertyp |
| Zone x | 3,0 | 3,0 | 1,0 | |
| Zone y | 3,0 | 3,0 | 3,0 | |
| Ausrichtwinkel | 0,0 | 1,0 | 0,0 | parallel |
| Zone x | 3,7 | 3,7 | 1,2 | |
| Zone y | 3,7 | 3,7 | 3,7 | Senkrecht vorwärts |
| Ausrichtwinkel | 0,0 | 1,2 | 1,1 | |
| Zone x | 2,6 | 2,6 | 0,9 | |
| Zone y | 2,6 | 2,6 | 2,6 | Senkrecht rückwärts |
| Ausrichtwinkel | 0,0 | 0,9 | 0,8 | |
| Zone x | 1,5 | 1,5 | 0,5 | |
| Zone y | 1,5 | 1,5 | 1,5 | Schräg vorwärts |
| Ausrichtwinkel | 0,0 | 0,5 | 0,0 | |

EP 3 700 805 B1

Fig. 7

Fig. 8

Fig. 9

Fig. 10

Fig. 11

**EP 3 700 805 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102015210428 A1
- DE 102006039583 A1
- DE 102011100277 A1
- US 2017096168 A1